# EUROPEAN PATENT APPLICATION

(11) **EP 4 723 598 A1**
(43) Date of publication of application: **08.04.2026**
(21) Application number: 24810147.9
(22) Date of filing: 25.04.2024
(51) Int. Cl.: H04L 67/10

(54) **COMPUTING POWER AND NETWORK SERVICE PROCESSING METHOD, APPARATUS, AND STORAGE MEDIUM**

(30) Priority: 24.05.2023 CN 202310595020
(71) Applicant: Datang Mobile Communications Equipment Co., Ltd., Beijing 100085 (CN)
(72) Inventor: WANG, Yapeng, Beijing 100085 (CN); SONG, Yaqin, Beijing 100085 (CN); GU, Xiaofei, Beijing 100085 (CN); LIU, Xianfeng, Beijing 100085 (CN); HU, Weiqi, Beijing 100085 (CN); CAO, Caihong, Beijing 100085 (CN)
(74) Representative: Studio Torta S.p.A.
(86) International application number: PCT/CN2024/089713
(87) International publication number: WO 2024/239900

(57) **Abstract**

The present application provides a method and apparatus for processing computing power and network services, and a storage medium. A management center determines an initial computing power service routing strategy according to a business requirement of a terminal device and sends it to the terminal device. After the terminal device accesses a corresponding initial computing power service according to the initial computing power service routing strategy, user experience information for the initial computing power service sent by the terminal device is received. A corresponding measurement is initiated according to the user experience information, an adjusted computing power service routing strategy is determined according to a measurement result and is sent to the terminal device, or feedback information is sent to the terminal device. By obtaining the user experience information for the initial computing power service and performing the corresponding measurement, the computing power service routing strategy is adjusted or information is fed back, thereby enhancing the user experience of the computing power service in a targeted manner, while more fully and reasonably utilizing computing and network resources, optimizing resource allocation, and more efficiently exerting the value of computing and network resources.

## Description

The present disclosure claims priority to Chinese Patent Application No. 202310595020.7, filed to China National Intellectual Property Administration on May 24, 2023 and entitled "METHOD AND APPARATUS FOR PROCESSING COMPUTING POWER AND NETWORK SERVICES, AND STORAGE MEDIUM", the content of which is hereby incorporated by reference in its entirety.

### TECHNICAL FIELD

The present disclosure relates to the field of communication technology, and in particular, to a method and apparatus for processing computing power and network services, and a storage medium.

### BACKGROUND

A computing power network is a comprehensive solution for information infrastructure. It provides the best computing power network allocation and computing-network integration solutions for users' different needs, enabling flexible allocation and scheduling of computing resources, storage resources, and network resources.

In the prior art, in order to achieve the service orchestration of the computing power network, a computing power network management center carries out computing power service orchestration and strategy adjustment by sensing computing power resource status on a business side and network resource status on a network side. However, the computing power service orchestration and strategy adjustment may not meet users' expected experience.

### SUMMARY

The present disclosure provides a method and apparatus for processing computing power and network services and a storage medium, aiming to realize the perception of users' computing power service experience data by the computing power network, fully and reasonably utilize computing and network resources, and further enhance the user service experience.

In a first aspect, the present disclosure provides a method for processing computing power and network services, which is applied to a management center, where the method includes:
determining an initial computing power service routing strategy according to a business requirement of a terminal device, and sending the initial computing power service routing strategy to the terminal device;
after the terminal device accesses a corresponding initial computing power service according to the initial computing power service routing strategy, receiving user experience information for the initial computing power service sent by the terminal device;
initiating a corresponding measurement according to the user experience information, determining an adjusted computing power service routing strategy according to a measurement result and sending the adjusted computing power service routing strategy to the terminal device, or sending feedback information to the terminal device.

Optionally, the receiving the user experience information for the initial computing power service sent by the terminal device after the terminal device accesses the corresponding initial computing power service according to the initial computing power service routing strategy, includes:
sending a user experience event subscription message to the terminal device after the terminal device accesses the corresponding initial computing power service according to the initial computing power service routing strategy, where the user experience event subscription message includes a user experience event type for the initial computing power service;
receiving the user experience information sent by the terminal device after the user experience event type is triggered, where the user experience information includes user experience data related to the user experience event type.

Optionally, the user experience event type includes one or more of the following:
startup time of an application used for accessing the initial computing power service exceeding a first preset duration; or
a number of restarts of the application used for accessing the initial computing power service exceeding a first preset number of times; or
during a process of service execution through the initial computing power service, a number of lags exceeding a second preset number of times; or
during a process of service execution through the initial computing power service, a single-lag time exceeding a second preset duration; or
during a process of service execution through the initial computing power service, a number of failed executions exceeding a third preset number of times; or
a connection-establishment delay for accessing the initial computing power service exceeding a third preset duration; or
a connection-establishment success rate for accessing the initial computing power service being lower than a preset success rate; or
a connection-interruption frequency for accessing the initial computing power service exceeding a preset frequency.

Optionally, the user experience data includes one or more of the following:
the startup time of the application used for accessing the initial computing power service; or
the number of restarts of the application used for accessing the initial computing power service; or
the number of lags and a monitoring period during the process of service execution through the initial computing power service; or
the single-lag time during the process of service execution through the initial computing power service; or
the number of failed executions and a monitoring period during the process of service execution through the initial computing power service; or
the connection-establishment delay for accessing the initial computing power service; or
the connection-establishment success rate for accessing the initial computing power service; or
the connection-interruption frequency for accessing the initial computing power service.

Optionally, after the terminal device accesses the corresponding initial computing power service according to the initial computing power service routing strategy, the method further includes:
establishing a computing power service mapping relationship, where the computing power service mapping relationship is a mapping relationship among one or more of an identifier of the terminal device, an identifier of an application used for accessing the initial computing power service, an identifier of a computing power node hosting the initial computing power service, and an identifier of the initial computing power service;
the sending the user experience event subscription message to the terminal device includes:
   sending the user experience event subscription message to the terminal device according to the computing power service mapping relationship.

Optionally, the user experience event subscription message further includes one or more of the following:
an identifier of the user experience event subscription message, an identifier of the terminal device, an identifier of an application used for accessing the initial computing power service, and a deadline for user experience event subscription.

Optionally, the sending the user experience event subscription message to the terminal device includes:
sending the user experience event subscription message to a radio access network RAN entity, to enable the RAN entity to send the user experience event subscription message to the terminal device;
the receiving the user experience information sent by the terminal device after the user experience event type is triggered includes:
   receiving the user experience information sent by the RAN entity, where the user experience information is sent by the terminal device to the RAN entity.

Optionally, the receiving the user experience information for the initial computing power service sent by the terminal device after the terminal device accesses the corresponding initial computing power service according to the initial computing power service routing strategy, includes:
receiving the user experience information for the initial computing power service actively sent by the terminal device after the terminal device accesses the corresponding initial computing power service according to the initial computing power service routing strategy, where the user experience information is subjective perception information of the user for the initial computing power service; or
after the terminal device accesses the corresponding initial computing power service according to the initial computing power service routing strategy, sending a user experience information collection request for the initial computing power service to the terminal device, and the terminal device responds to the user experience information collection request by sending the user experience information for the initial computing power service, where the user experience information is subjective perception information of the user for the initial computing power service.

Optionally, the receiving the user experience information for the initial computing power service actively sent by the terminal device includes:
receiving the user experience information sent by a RAN entity, where the user experience information is actively sent by the terminal device to the RAN entity; or
the sending the user experience information collection request for the initial computing power service to the terminal device, and receiving the user experience information for the initial computing power service that the terminal device sends in response to the user experience information collection request, includes:
   sending the user experience information collection request to the RAN entity to enable the RAN entity to send the user experience information collection request to the terminal device, and receiving the user experience information sent by the RAN entity, where the user experience information is information that the terminal device sends to the RAN entity in response to the user experience information collection request.

Optionally, the initiating the corresponding measurement according to the user experience information includes:
performing cause analysis according to the user experience information, determining a measurement task according to a result of the analysis, and performing the measurement task, where the measurement task includes at least one of: a capability measurement of the terminal device, a computing capability measurement of a computing power node, and a quality measurement of a network service.

Optionally, the performing the cause analysis according to the user experience information, determining the measurement task according to the result of the analysis, and performing the measurement task includes:
determining a predicted cause that triggers the user experience event type according to the user experience information, determining a measurement task corresponding to the predicted cause as a highest priority measurement task, and executing the highest priority measurement task;
after executing the highest priority measurement task, if the predicted cause is determined to be an actual cause that triggers the user experience event type, then terminating the measurement task; or
if the predicted cause is determined not to be the actual cause that triggers the user experience event type, then executing a further measurement task.

Optionally, the determining the predicted cause that triggers the user experience event type according to the user experience information includes:
if the user experience information is relevant information pertaining to an application used for accessing the initial computing power service, then determining that the predicted cause that triggers the user experience event type is an insufficient capability of the terminal device; or
if the user experience information is relevant information pertaining to a lag or an execution failure during a process of service execution through the initial computing power service, then determining that the predicted cause that triggers the user experience event type is an insufficient computing capability of the initial computing power service and/or an insufficient quality of the network service; or
if the user experience information is a connection problem in accessing the initial computing power service, then determining that the predicted cause that triggers the user experience event type is an insufficient network-access capability of the terminal device or a terminal device type mismatch.

Optionally, the determining the adjusted computing power service routing strategy according to the measurement result and sending the adjusted computing power service routing strategy to the terminal device, or sending the feedback information to the terminal device, includes:
if the actual cause that triggers the user experience event type is determined to be a network cause according to the measurement result, then determining a new computing power service routing strategy to reach the initial computing power service, and sending the new computing power service routing strategy to the terminal device; or
if the actual cause that triggers the user experience event type is determined to be an initial computing power service cause according to the measurement result, then determining a new computing power service, determining a new computing power service routing strategy to reach the new computing power service, and sending the new computing power service routing strategy to the terminal device; or
if the actual cause that triggers the user experience event type is determined to be the terminal device according to the measurement result, then sending the feedback information to the terminal device, where the feedback information includes the actual cause and/or a solution; or
if the actual cause that triggers the user experience event type is determined to be the terminal device according to the measurement result, then determining a new computing power service routing strategy to reach a new computing power service according to a capability of the terminal device, computing power resource status, and network resource status, and sending the new computing power service routing strategy to the terminal device; or
if the actual cause that triggers the user experience event type is determined to be the terminal device according to the measurement result, and the terminal device is determined to be incapable of capability enhancement, then determining a new computing power service with a lower computing capability than the initial computing power service, determining a new computing power service routing strategy to reach the new computing power service, and sending the new computing power service routing strategy to the terminal device.

Optionally, the determining the adjusted computing power service routing strategy according to the measurement result and sending the adjusted computing power service routing strategy to the terminal device, or sending the feedback information to the terminal device, includes:
determining the adjusted computing power service routing strategy according to the measurement result, and sending the adjusted computing power service routing strategy to a RAN entity, to enable the RAN entity to send the adjusted computing power service routing strategy to the terminal device; or
sending the feedback information to a RAN entity, to enable the RAN entity to send the feedback information to the terminal device.

Optionally, the determining the initial computing power service routing strategy according to a business requirement of the terminal device includes:
receiving the business requirement sent by the terminal device, and determining an initial service routing strategy according to the business requirement; or
receiving the business requirement sent by a RAN entity, and determining an initial service routing strategy according to the business requirement, where the business requirement is sent by the terminal device to the RAN entity.

Optionally, the sending the initial computing power service routing strategy to the terminal device includes:
sending the initial computing power service routing strategy to a RAN entity, to enable the RAN entity to send the initial computing power service routing strategy to the terminal device.

Optionally, the method further includes:
sending the initial computing power service routing strategy to a core network entity, to enable establishment of a user plane path according to the initial computing power service routing strategy for the terminal device to access the initial computing power service corresponding to the initial computing power service routing strategy.

Optionally, the sending the initial computing power service routing strategy to the terminal device further includes:
sending an identifier of a computing power node hosting the initial computing power service and an identifier of the initial computing power service to the terminal device.

In a second aspect, the present disclosure provides a method for processing computing power and network services, which is applied to a terminal device, where the method includes:
receiving an initial computing power service routing strategy determined by a management center according to a business requirement of the terminal device;
accessing a corresponding initial computing power service according to the initial computing power service routing strategy;
sending user experience information for the initial computing power service to the management center;
receiving an adjusted computing power service routing strategy or feedback information sent by the management center, where the adjusted computing power service routing strategy is a computing power service routing strategy adjusted by the management center after performing a corresponding measurement according to the user experience information.

Optionally, the sending the user experience information for the initial computing power service to the management center includes:
receiving a user experience event subscription message sent by the management center, where the user experience event subscription message includes a user experience event type for the initial computing power service;
determining whether the user experience event type is triggered;
upon determining that the user experience event type is triggered, sending the user experience information for the initial computing power service to the management center.

Optionally, the receiving the user experience event subscription message sent by the management center includes:
receiving the user experience event subscription message sent by a RAN entity, where the user experience event subscription message is sent by the management center to the RAN entity;
the sending the user experience information for the initial computing power service to the management center includes:
   sending the user experience information for the initial computing power service to the RAN entity, to enable the RAN entity to send the user experience information for the initial computing power service to the management center.

Optionally, the sending the user experience information for the initial computing power service to the management center includes:
actively sending the user experience information for the initial computing power service to the management center, where the user experience information is subjective perception information of the user for the initial computing power service; or
receiving a user experience information collection request for the initial computing power service sent by the management center, and sending the user experience information for the initial computing power service to the management center in response to the user experience information collection request, where the user experience information is subjective perception information of the user for the initial computing power service.

Optionally, the actively sending the user experience information for the initial computing power service to the management center includes:
actively sending the user experience information for the initial computing power service to a RAN entity, to enable the RAN entity to send the user experience information for the initial computing power service to the management center; or
the receiving the user experience information collection request for the initial computing power service sent by the management center, and sending the user experience information for the initial computing power service to the management center in response to the user experience information collection request, includes:
   receiving the user experience information collection request for the initial computing power service sent by a RAN entity, where the user experience information collection request is actively sent by the terminal device to the RAN entity; in response to the user experience information collection request, sending the user experience information for the initial computing power service to the RAN entity, to enable the RAN entity to send the user experience information for the initial computing power service to the management center.

Optionally, the method further includes:
when the management center initiates a computing capacity measurement of the terminal device, obtaining one or more of a load size, a computing power resource size, and a computing power resource utilization rate of the terminal device, and sending to the management center; or
when the management center initiates a network-access capability measurement of the terminal device, obtaining one or more of a wireless access capability of the terminal device and a terminal device type, and sending to the management center.

Optionally, the receiving the adjusted computing power service routing strategy or the feedback information sent by the management center includes:
receiving the adjusted computing power service routing strategy or the feedback information sent by a RAN entity, where the adjusted computing power service routing strategy or the feedback information is sent by the management center to the RAN entity.

Optionally, the accessing the corresponding initial computing power service according to the initial computing power service routing strategy includes:
initiating an application used for accessing the initial computing power service, and accessing the initial computing power service through the application.

Optionally, before receiving the initial computing power service routing strategy determined by the management center according to the business requirement of the terminal device, the method further includes:
sending the business requirement to the management center; or
sending the business requirement to a RAN entity to enable the RAN entity to send the business requirement to the management center.

In a third aspect, the present disclosure provides a management center entity, including a memory, a transceiver, and a processor;
the memory is configured to store a computer program; the transceiver is configured to receive and transmit data under control of the processor; the processor is configured to read the computer program in the memory and execute following operations:
determining an initial computing power service routing strategy according to a business requirement of a terminal device, and sending the initial computing power service routing strategy to the terminal device;
after the terminal device accesses a corresponding initial computing power service according to the initial computing power service routing strategy, receiving user experience information for the initial computing power service sent by the terminal device;
initiating a corresponding measurement according to the user experience information, determining an adjusted computing power service routing strategy according to a measurement result and sending the adjusted computing power service routing strategy to the terminal device, or sending feedback information to the terminal device.

Optionally, when receiving the user experience information for the initial computing power service sent by the terminal device after the terminal device accesses the corresponding initial computing power service according to the initial computing power service routing strategy, the processor is configured to:
send a user experience event subscription message to the terminal device after the terminal device accesses the corresponding initial computing power service according to the initial computing power service routing strategy, where the user experience event subscription message includes a user experience event type for the initial computing power service;
receive the user experience information sent by the terminal device after the user experience event type is triggered, where the user experience information includes user experience data related to the user experience event type.

Optionally, the user experience event type includes one or more of the following:
startup time of an application used for accessing the initial computing power service exceeding a first preset duration; or
a number of restarts of the application used for accessing the initial computing power service exceeding a first preset number of times; or
during a process of service execution through the initial computing power service, a number of lags exceeding a second preset number of times; or
during a process of service execution through the initial computing power service, a single-lag time exceeding a second preset duration; or
during a process of service execution through the initial computing power service, a number of failed executions exceeding a third preset number of times; or
a connection-establishment delay for accessing the initial computing power service exceeding a third preset duration; or
a connection-establishment success rate for accessing the initial computing power service being lower than a preset success rate; or
a connection-interruption frequency for accessing the initial computing power service exceeding a preset frequency.

Optionally, the user experience data includes one or more of the following:
the startup time of the application used for accessing the initial computing power service; or
the number of restarts of the application used for accessing the initial computing power service; or
the number of lags and a monitoring period during the process of service execution through the initial computing power service; or
the single-lag time during the process of service execution through the initial computing power service; or
the number of failed executions and a monitoring period during the process of service execution through the initial computing power service; or
the connection-establishment delay for accessing the initial computing power service; or
the connection-establishment success rate for accessing the initial computing power service; or
the connection-interruption frequency for accessing the initial computing power service.

Optionally, after the terminal device accesses the corresponding initial computing power service according to the initial computing power service routing strategy, the processor is further configured to:
establish a computing power service mapping relationship, where the computing power service mapping relationship is a mapping relationship among one or more of an identifier of the terminal device, an identifier of an application used for accessing the initial computing power service, an identifier of a computing power node hosting the initial computing power service, and an identifier of the initial computing power service;
when sending the user experience event subscription message to the terminal device, the processor is configured to:
   send the user experience event subscription message to the terminal device according to the computing power service mapping relationship.

Optionally, the user experience event subscription message further includes one or more of the following:
an identifier of the user experience event subscription message, an identifier of the terminal device, an identifier of an application used for accessing the initial computing power service, and a deadline for user experience event subscription.

Optionally, when sending the user experience event subscription message to the terminal device, the processor is configured to:
send the user experience event subscription message to a radio access network RAN entity, to enable the RAN entity to send the user experience event subscription message to the terminal device;
when receiving the user experience information sent by the terminal device after the user experience event type is triggered, the processor is configured to:
   receive the user experience information sent by the RAN entity, where the user experience information is sent by the terminal device to the RAN entity.

Optionally, when receiving the user experience information for the initial computing power service sent by the terminal device after the terminal device accesses the corresponding initial computing power service according to the initial computing power service routing strategy, the processor is configured to:
receive the user experience information for the initial computing power service actively sent by the terminal device after the terminal device accesses the corresponding initial computing power service according to the initial computing power service routing strategy, where the user experience information is subjective perception information of the user for the initial computing power service; or
after the terminal device accesses the corresponding initial computing power service according to the initial computing power service routing strategy, send a user experience information collection request for the initial computing power service to the terminal device, and the terminal device responds to the user experience information collection request by sending the user experience information for the initial computing power service, where the user experience information is subjective perception information of the user for the initial computing power service.

Optionally, when receiving the user experience information for the initial computing power service actively sent by the terminal device, the processor is configured to:
receive the user experience information sent by a RAN entity, where the user experience information is actively sent by the terminal device to the RAN entity; or
when sending the user experience information collection request for the initial computing power service to the terminal device, and receiving the user experience information for the initial computing power service that the terminal device sends in response to the user experience information collection request, the processor is configured to:
   send the user experience information collection request to the RAN entity to enable the RAN entity to send the user experience information collection request to the terminal device, and receive the user experience information sent by the RAN entity, where the user experience information is information that the terminal device sends to the RAN entity in response to the user experience information collection request.

Optionally, when initiating the corresponding measurement according to the user experience information, the processor is configured to:
perform cause analysis according to the user experience information, determine a measurement task according to a result of the analysis, and perform the measurement task, where the measurement task includes at least one of: a capability measurement of the terminal device, a computing capability measurement of a computing power node, and a quality measurement of a network service.

Optionally, when performing the cause analysis according to the user experience information, determining the measurement task according to the result of the analysis, and performing the measurement task, the processor is configured to:
determine a predicted cause that triggers the user experience event type according to the user experience information, determine a measurement task corresponding to the predicted cause as a highest priority measurement task, and execute the highest priority measurement task;
after executing the highest priority measurement task, if the predicted cause is determined to be an actual cause that triggers the user experience event type, then terminate the measurement task; or
if the predicted cause is determined not to be the actual cause that triggers the user experience event type, then execute a further measurement task.

Optionally, when determining the predicted cause that triggers the user experience event type according to the user experience information, the processor is configured to:
if the user experience information is relevant information pertaining to an application used for accessing the initial computing power service, then determine that the predicted cause that triggers the user experience event type is an insufficient capability of the terminal device; or
if the user experience information is relevant information pertaining to a lag or an execution failure during a process of service execution through the initial computing power service, then determine that the predicted cause that triggers the user experience event type is an insufficient computing capability of the initial computing power service and/or an insufficient quality of the network service; or
if the user experience information is a connection problem in accessing the initial computing power service, then determine that the predicted cause that triggers the user experience event type is an insufficient network-access capability of the terminal device or a terminal device type mismatch.

Optionally, when determining the adjusted computing power service routing strategy according to the measurement result and sending the adjusted computing power service routing strategy to the terminal device, or when sending feedback information to the terminal device, the processor is configured to:
if the actual cause that triggers the user experience event type is determined to be a network cause according to the measurement result, then determine a new computing power service routing strategy to reach the initial computing power service, and send the new computing power service routing strategy to the terminal device; or
if the actual cause that triggers the user experience event type is determined to be an initial computing power service cause according to the measurement result, then determine a new computing power service, determine a new computing power service routing strategy to reach the new computing power service, and send the new computing power service routing strategy to the terminal device; or
if the actual cause that triggers the user experience event type is determined to be the terminal device according to the measurement result, then send the feedback information to the terminal device, where the feedback information includes the actual cause and/or a solution; or
if the actual cause that triggers the user experience event type is determined to be the terminal device according to the measurement result, then determine a new computing power service routing strategy to reach a new computing power service according to a capability of the terminal device, computing power resource status, and network resource status, and send the new computing power service routing strategy to the terminal device; or
if the actual cause that triggers the user experience event type is determined to be the terminal device according to the measurement result, and the terminal device is determined to be incapable of capability enhancement, then determine a new computing power service with a lower computing capability than the initial computing power service, determine a new computing power service routing strategy to reach the new computing power service, and send the new computing power service routing strategy to the terminal device.

Optionally, when determining the adjusted computing power service routing strategy according to the measurement result and sending the adjusted computing power service routing strategy to the terminal device, or when sending feedback information to the terminal device, the processor is configured to:
determine the adjusted computing power service routing strategy according to the measurement result, and send the adjusted computing power service routing strategy to a RAN entity, to enable the RAN entity to send the adjusted computing power service routing strategy to the terminal device; or
send the feedback information to a RAN entity, to enable the RAN entity to send the feedback information to the terminal device.

Optionally, when determining the initial computing power service routing strategy according to the business requirement of the terminal device, the processor is configured to:
receive the business requirement sent by the terminal device, and determine an initial service routing strategy according to the business requirement; or
receive the business requirement sent by a RAN entity, and determine an initial service routing strategy according to the business requirement, where the business requirement is sent by the terminal device to the RAN entity.

Optionally, when sending the initial computing power service routing strategy to the terminal device, the processor is configured to:
send the initial computing power service routing strategy to a RAN entity, to enable the RAN entity to send the initial computing power service routing strategy to the terminal device.

Optionally, the processor is further configured to:
send the initial computing power service routing strategy to a core network entity, to enable establishment of a user plane path according to the initial computing power service routing strategy for the terminal device to access the initial computing power service corresponding to the initial computing power service routing strategy.

Optionally, when sending the initial computing power service routing strategy to the terminal device, the processor is configured to:
send an identifier of a computing power node hosting the initial computing power service and an identifier of the initial computing power service to the terminal device.

In a fourth aspect, the present disclosure provides a terminal device, including a memory, a transceiver, and a processor;
the memory is configured to store a computer program; the transceiver is configured to receive and transmit data under control of the processor; the processor is configured to read the computer program stored in the memory and execute the following operations:
receiving an initial computing power service routing strategy determined by a management center according to a business requirement of the terminal device;
accessing a corresponding initial computing power service according to the initial computing power service routing strategy;
sending user experience information for the initial computing power service to the management center;
receiving an adjusted computing power service routing strategy or feedback information sent by the management center, where the adjusted computing power service routing strategy is a computing power service routing strategy adjusted by the management center after performing a corresponding measurement according to the user experience information.

Optionally, when sending the user experience information for the initial computing power service to the management center, the processor is configured to:
receive a user experience event subscription message sent by the management center, where the user experience event subscription message includes a user experience event type for the initial computing power service;
determine whether the user experience event type is triggered;
upon determining that the user experience event type is triggered, send the user experience information for the initial computing power service to the management center.

Optionally, when receiving the user experience event subscription message sent by the management center, the processor is configured to:
receive the user experience event subscription message sent by a RAN entity, where the user experience event subscription message is sent by the management center to the RAN entity;
when sending the user experience information for the initial computing power service to the management center, the processor is configured to:
   send the user experience information for the initial computing power service to the RAN entity, to enable the RAN entity to send the user experience information for the initial computing power service to the management center.

Optionally, when sending the user experience information for the initial computing power service to the management center, the processor is configured to:
actively send the user experience information for the initial computing power service to the management center, where the user experience information is subjective perception information of the user for the initial computing power service; or
receive a user experience information collection request for the initial computing power service sent by the management center, and send the user experience information for the initial computing power service to the management center in response to the user experience information collection request, where the user experience information is subjective perception information of the user for the initial computing power service.

Optionally, when actively sending the user experience information for the initial computing power service to the management center, the processor is configured to:
actively send the user experience information for the initial computing power service to a RAN entity, to enable the RAN entity to send the user experience information for the initial computing power service to the management center; or
when receiving the user experience information collection request for the initial computing power service sent by the management center, and sending the user experience information for the initial computing power service to the management center in response to the user experience information collection request, the processor is configured to:
   receive the user experience information collection request for the initial computing power service sent by a RAN entity, where the user experience information collection request is actively sent by the terminal device to the RAN entity; in response to the user experience information collection request, send the user experience information for the initial computing power service to the RAN entity, to enable the RAN entity to send the user experience information for the initial computing power service to the management center.

Optionally, the processor is further configured to:
when the management center initiates a computing capacity measurement of the terminal device, obtain one or more of a load size, a computing power resource size, and a computing power resource utilization rate of the terminal device, and send to the management center; or
when the management center initiates a network-access capability measurement of the terminal device, obtain one or more of a wireless access capability of the terminal device and a terminal device type, and send to the management center.

Optionally, when receiving the adjusted computing power service routing strategy or the feedback information sent by the management center, the processor is configured to:
receive the adjusted computing power service routing strategy or the feedback information sent by a RAN entity, where the adjusted computing power service routing strategy or the feedback information is sent by the management center to the RAN entity.

Optionally, when accessing the corresponding initial computing power service according to the initial computing power service routing strategy, the processor is configured to:
initiate an application used for accessing the initial computing power service, and access the initial computing power service through the application.

Optionally, before the processor receives the initial computing power service routing strategy determined by the management center according to the business requirement of the terminal device, the processor is further configured to:
send the business requirement to the management center; or
send the business requirement to a RAN entity to enable the RAN entity to send the business requirement to the management center.

In a fifth aspect, the present disclosure provides an apparatus for processing computing power and network services, including:
a computing power service orchestrating unit, configured to determine an initial computing power service routing strategy according to a business requirement of a terminal device, and send the initial computing power service routing strategy to the terminal device;
a user experience information acquiring unit, configured to: after the terminal device accesses a corresponding initial computing power service according to the initial computing power service routing strategy, receive user experience information for the initial computing power service sent by the terminal device;
a computing power service adjusting unit, configured to initiate a corresponding measurement according to the user experience information, determine an adjusted computing power service routing strategy according to a measurement result and send the adjusted computing power service routing strategy to the terminal device, or send feedback information to the terminal device.

In a sixth aspect, the present disclosure provides an apparatus for processing computing power and network services, including:
a receiving unit, configured to receive an initial computing power service routing strategy determined by a management center according to a business requirement of the terminal device;
an accessing unit, configured to access a corresponding initial computing power service according to the initial computing power service routing strategy;
a sending unit, configured to send user experience information for the initial computing power service to the management center;
the receiving unit is further configured to receive an adjusted computing power service routing strategy or feedback information sent by the management center, where the adjusted computing power service routing strategy is a computing power service routing strategy adjusted by the management center after performing the corresponding measurement according to the user experience information.

In a seventh aspect, the present disclosure provides a non-transitory readable storage medium, where the non-transitory readable storage medium stores a computer program, and the computer program is configured to enable a processor to execute the method as described in the first aspect or the second aspect.

In the method and apparatus for processing computing power and network services, and the storage medium provided by the present disclosure, an initial computing power service routing strategy is determined by a management center according to a business requirement of a terminal device, and the initial computing power service routing strategy is sent to the terminal device. After the terminal device accesses a corresponding initial computing power service according to the initial computing power service routing strategy, user experience information for the initial computing power service sent by the terminal device is received. A corresponding measurement is initiated according to the user experience information, an adjusted computing power service routing strategy is determined according to a measurement result and is sent to the terminal device, or feedback information is sent to the terminal device. By obtaining the user experience information for the initial computing power service and performing the corresponding measurement, the computing power service routing strategy is adjusted or information is fed back, thereby enhancing the user experience of the computing power service in a targeted manner, while more fully and reasonably utilizing computing and network resources, optimizing resource allocation, and more efficiently exerting the value of computing and network resources.

It should be understood that the content described in the above summary is not intended to limit the key or important features of the embodiments of the present disclosure, nor is it used to restrict the scope of the present disclosure. Other features of the present disclosure will become easily understandable through the following description.

### BRIEF DESCRIPTION OF DRAWINGS

In order to more clearly illustrate the technical scheme of the present disclosure or in the prior art, a brief description of the drawings required to be used in the embodiments or in the description of the prior art is presented below. It is obvious that the drawings in the description below are embodiments of the present disclosure. For ordinary technical personnel in the field, other drawings can be obtained according to these drawings without paying any creative labor.
FIG. 1 is an application scenario diagram of a method for processing computing power and network services provided by an embodiment of the present disclosure.
FIG. 2 is a flowchart of a method for processing computing power and network services provided by an embodiment of the present disclosure.
FIG. 3 is a flowchart of a method for processing computing power and network services provided by another embodiment of the present disclosure.
FIG. 4 is a flowchart of a method for processing computing power and network services provided by another embodiment of the present disclosure.
FIG. 5 is a signaling diagram of a method for processing computing power and network services provided by an embodiment of the present disclosure.
FIG. 6 is a signaling diagram of a method for processing computing power and network services provided by another embodiment of the present disclosure.
FIG. 7 is a structural diagram of a management center entity provided by an embodiment of the present disclosure.
FIG. 8 is a structural diagram of a terminal device provided by an embodiment of the present disclosure.
FIG. 9 is a structural diagram of an apparatus for processing computing power and network services provided by an embodiment of the present disclosure.
FIG. 10 is a structural diagram of an apparatus for processing computing power and network services provided by another embodiment of the present disclosure.

### DESCRIPTION OF EMBODIMENTS

In the present disclosure, the term "and/or" describes the association relationship of associated objects, indicating that there can be three possible relationships, such as A and/or B, which can represent: A exists alone, A and B exist simultaneously, or B exists alone. The character "/" generally indicates that associated objects in sequence have an "or" relationship.

In the embodiments of the present disclosure, the term "multiple" refers to two or more, and other quantifiers are similar. Additionally, the terms "first" and "second" etc. are only used for descriptive purposes and should not be interpreted as indicating or suggesting relative importance or implicitly indicating the quantity of the technical features being referred to.

In the prior art, the research on computing power networks has currently focused primarily on the bearer network. In the overall architecture of the computing power network, a computing network infrastructure layer is introduced as a new infrastructure layer of the computing power network, while a computing power service layer, a computing power routing layer and a computing network orchestration management layer are introduced as three core functional modules for realizing the perceptibility, controllability and manageability of the computing power network, so as to achieve the perception, control and management of computing power and network resources.

The computing power network supports the perception and notification of computing power information and network information. An entry network node acquires the current available resource status of other node devices such as network node(s) and computing power node(s). The network information can include network topology, bandwidth, delay, jitter, etc. The computing power information includes the computing power enabling information, deployment locations and status of the nodes deployed in the network, which can refer to the number of service/task connections, CPU/GPU computing power, deployment form (physical, virtual), deployment location (corresponding IP address), storage capacity, storage form, etc., or the abstracted computing ability based on said basic computing power resources. The computing power information is used to reflect the current available computing power and a distribution location and form of each node.

A computing power network management center can orchestrate computing power service and adjust strategies according to the perceived computing power resource status on a business side and the perceived network side resource status on a network side, however, this computing power service orchestration and strategy adjustment lacks awareness of user experience, it aims only to meet the user's business requirement based on the computing power resource status and network resource status, but the user experience may be degraded and thus fail to meet the user's expected experience. For example, when a user uses an XR type interactive business, although the computing power and network meet the user's business requirement, but it may not achieve the user's expected experience (for example, due to insufficient computing power, excessive service load, insufficient wireless access capability, mismatched terminal type of the user's terminal device, etc., it may not achieve the desired large bandwidth, low delay business effect). Since the computing power network lacks awareness of user experience, it cannot factor user experience into the scheduling strategy adjustment of the computing power service and optimization of computing power resources, thereby resulting in poor user experience of the computing power service and sub-optimal allocation of computing power resources and network resources.

In a related technology, it is possible to conduct research on mobile network quality evaluation based on the user experience. This evaluation focuses on voice businesses, video businesses, data businesses, and other businesses. A key indicator related to user experience is measured. For voice businesses, connection success rate, call drop rate, call setup time, voice quality, etc. are tested through a service flow that includes request initiation, connection establishment, call maintenance, and call termination. For the data businesses, web access success rate, first screen response time of the web, file upload/download success rate, file upload/download time, upload/download rate are tested via web browsing, FTP/HTTP file upload/download, software speed testing, etc. For the video businesses, video playback success rate, first frame response time, the number of lags, video playback quality are tested in a live-streaming scenario.

However, the mobile network quality evaluation based on the user experience is also from the perspective of network operators: testing tools measure the indicators related to user experience, without integrating any computing power service dimension.

In another related technology, an evaluation method for Quality of Experience (Quality of Experience, QoE) is provided. QoE refers to a user's subjective perception of the quality and performance of devices, networks, systems, applications or services. QoE refers to the perceived difficulty a user experiences when completing an entire process. Main indicators of QoE generally include: for business-related aspects such as connection-establishment delay, connection-establishment success rate, connection-interruption frequency, etc., and for video-related aspects such as lag frequency, startup time, average bitrate, playback failure rate, etc.

The evaluation method for QoE includes objective evaluation and subjective evaluation approaches.

The objective evaluation method mainly involves establishing a mapping method from a QoE parameter to a QoS (Quality of Service, quality of service) parameter. There is currently no unified standard for measuring the QoE parameter, and the commonly used QoE measurement method in the industry are divided into three categories: a client-side measurement method, a network-side measurement method and a server-side measurement method.

The client-side measurement method: using tools on a client side to directly measure the QoE of a user's business, yielding more accurate objective data and application-level quality indicators.

The network-side measurement method: a network service provider can collect more and more real-time network QoS data, such as throughput, packet loss, jitter, out-of-order, etc., but such information cannot directly reflect the QoE of the network. A main purpose of a network QoE measurement is to predict network-video QoE from network QoS indicators.

The server-side measurement method: every data packet is collected on a business server, a business session is reconstructed, information such as the number of interruptions, initial startup time, a lag duration, bitrate switching frequency, etc. are analyzed.

While the subjective evaluation method mainly relies on human raters, conducting user surveys, user complaint analysis, etc., to capture users' perception of the business quality.

However, the evaluation methods for QoE require direct terminal-side tool measurement, and they have not been combined with the computing power network, and provide neither data awareness nor feedback for computing power services.

To solve the above technical problems, the present disclosure provides a method for processing computing power and network services. An initial computing power service routing strategy is determined by a management center according to a business requirement of a terminal device, and the initial computing power service routing strategy is sent to the terminal device. After the terminal device accesses a corresponding initial computing power service according to the initial computing power service routing strategy, user experience information for the initial computing power service sent by the terminal device is received. A corresponding measurement is initiated according to the user experience information, an adjusted computing power service routing strategy is determined according to a measurement result and is sent to the terminal device, or feedback information is sent to the terminal device. By obtaining the user experience information for the initial computing power service and performing the corresponding measurement, the computing power service routing strategy is adjusted or information is fed back, thereby enhancing the user experience of the computing power service in a targeted manner, while more fully and reasonably utilizing computing and network resources, optimizing resource allocation, and more efficiently exerting the value of computing and network resources.

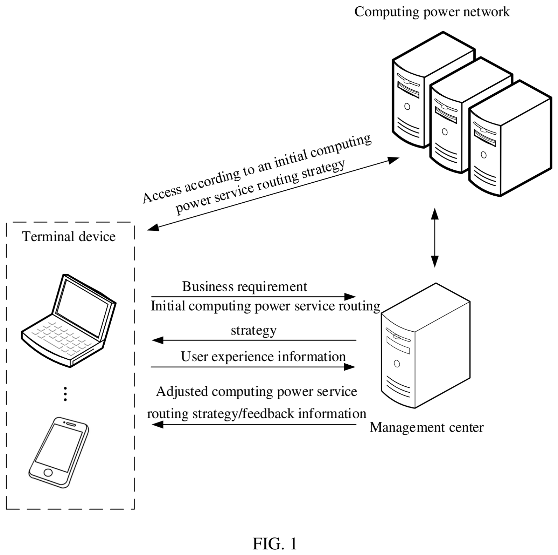

Embodiments of the present disclosure are applied to an application scenario shown in FIG. 1, the application scenario includes a terminal device, a management center, and a computing power network. The terminal device can send a business requirement to the management center, the management center determines an initial computing power service routing strategy according to the business requirement of the terminal device and sends it to the terminal device. The terminal device accesses a corresponding initial computing power service according to the initial computing power service routing strategy and sends user experience information for the initial computing power service to the management center. The management center initiates a corresponding measurement according to the user experience information and determines an adjusted computing power service routing strategy according to the measurement result and sends it to the terminal device, or sends feedback information to the terminal device.

The method for processing computing power and network services of the present disclosure can be applied in both a fixed network scenario and a mobile communication network scenario.

The mobile communication network can be any mobile communication network, including but not limited to 4G networks, 5G networks, 6G networks and various other mobile communication network systems, such as a global system of mobile communication (global system of mobile communication, GSM), a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc.

The terminal device involved in the embodiments of the present disclosure can refer to a device that provides voice and/or data connectivity for users. In the fixed network scenario, the terminal device can be a wired terminal device or a wireless terminal device. In the mobile communication network scenario, the terminal device can be a handheld device with wireless connection function, or other processing device connected to a wireless modem, etc. In different systems, the name of the terminal device may also be different. For example, in a 5G system, the terminal device can be called user equipment (User Equipment, UE). The wireless terminal device can communicate with one or more core networks (Core Network, CN) through a radio access network (Radio Access Network, RAN), and the wireless terminal device can be a mobile terminal device, such as a mobile phone (or called "cellular" phone) and a computer with the mobile terminal device, for example, portable, pocket-sized, handheld, computer-integrated or vehicle-mounted mobile apparatus, which exchange language and/or data with the radio access network. For example, devices such as a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), etc. The wireless terminal devices can also be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), a user device (user device). The present disclosure embodiment is not limited to these terms.

The technical solution in the embodiments of the present disclosure will be clearly and completely described in combination with the drawings in the embodiments of the present disclosure. Obviously, the described embodiments are only a part of the embodiments of the present disclosure, but not all embodiments. Based on the embodiments in the present disclosure, all other embodiments acquired by ordinary technical personnel in the field without paying creative labor are subject to the protection of the present disclosure.

The method and the apparatus are based on the same application concept. Since the principles of solving problems by the method and the apparatus are similar, the implementation of the apparatus and the method can be cross-referenced, and the repeated parts will not be described again.

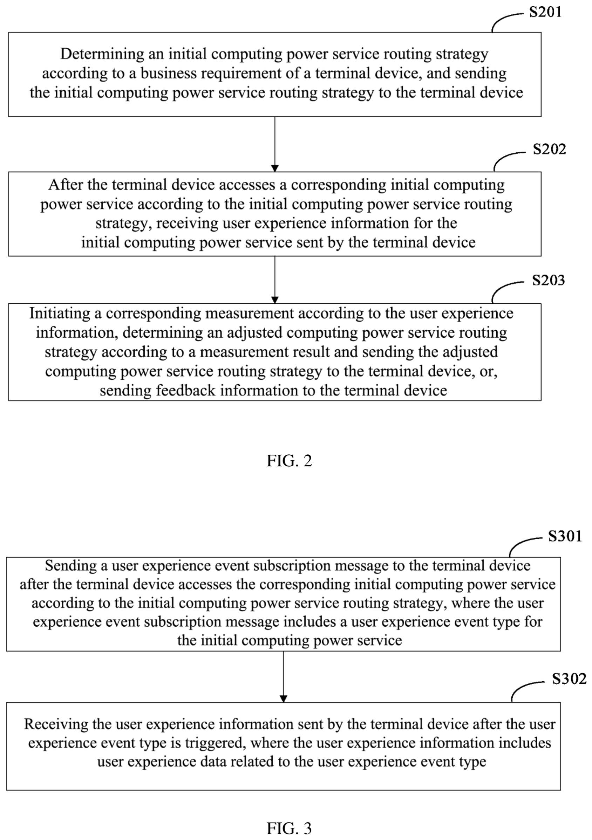

FIG. 2 is a flowchart of a method for processing computing power and network services provided by the embodiment. As shown in FIG. 2, the embodiment provides a method for processing computing power and network services, and an execution entity is a management center.

Specific steps of the method are as follows:
S201, determining an initial computing power service routing strategy according to a business requirement of a terminal device, and sending the initial computing power service routing strategy to the terminal device.

In this embodiment, the terminal device may have certain business requirements, such as video rendering, but the terminal device may not have a video rendering function. Therefore, the video rendering can be achieved by accessing a computing power service. The terminal device can send the business requirement to the management center, where the business requirement includes a computing power requirement, such as the type of required service, the amount of required service resources, etc., and the business requirement can also include a network requirement, such as a bandwidth requirement, a delay requirement, etc. Further, the management center can allocate the initial computing power service for the terminal device according to the business requirement of the terminal device and orchestrate the initial computing power service routing strategy (that is, a routing path for the terminal device to access the initial computing power service), and send the initial computing power service routing strategy to the terminal device. Optionally, since the computing power services are deployed on computing power nodes, and one or more computing power services may be deployed on one computing power node, the initial computing power service routing strategy can be a routing path for the terminal device to access the computing power node hosting the initial computing power service, and the management center can also send an identifier of the computing power node hosting the initial computing power service and an identifier of the initial computing power service to the terminal device, to enable the terminal device to access the initial computing power service according to the identifier of the initial computing power service after accessing the computing power node.

In the fixed network scenario, the terminal device can send the business requirement to the management center, and after receiving the business requirement sent by the terminal device, the management center determines the initial service routing strategy according to the business requirement and sends the initial computing power service routing strategy to the terminal device. In a mobile communication network scenario, the terminal device can send the business requirement to a RAN (Radio Access Network, radio access network) entity, and the RAN entity sends the business requirement to the management center. After receiving the business requirement sent by the RAN entity, the management center determines the initial service routing strategy according to the business requirement, and further, the management center sends the initial computing power service routing strategy to the RAN entity, and the RAN entity sends the initial computing power service routing strategy to the terminal device.

S202, after the terminal device accesses a corresponding initial computing power service according to the initial computing power service routing strategy, receiving user experience information for the initial computing power service sent by the terminal device.

In this embodiment, after receiving the initial computing power service routing strategy, the terminal device can access the corresponding initial computing power service according to the initial computing power service routing strategy. Optionally, the terminal device can access the initial computing power service through an application (APP). For different computing power services, the terminal device can access them with the same application (APP), or it can access them with different applications (APP), and of course, the terminal device can also choose not to access the service through an application.

After the terminal device accesses the initial computing power service, the terminal device can send the user experience information for the initial computing power service to the management center, where the user experience information for the initial computing power service can be parameter data that reflects user experience. For example, one or more of following data: startup time of an application used for accessing the initial computing power service, the number of restarts of the application used for accessing the initial computing power service, a lag duration of the initial computing power service, the number of lags of the initial computing power service, the number of failures of the initial computing power service, a connection-establishment delay for accessing the initial computing power service, a connection-establishment success rate for accessing the initial computing power service, a terminal frequency for accessing the initial computing power service, etc. Alternatively, the user experience information for the initial computing power service may also include subjective perception information of the user for the initial computing power service, such as whether the user is satisfied with the initial computing power service, how the user rates his satisfaction, existing problems, whether the user intends to continue using the initial computing power service, suggestions, etc.

In the fixed network scenario, the terminal device can directly send the user experience information for the initial computing power service to the management center. In the mobile communication network scenario, the terminal device can send the user experience information for the initial computing power service to the RAN entity, and the RAN entity sends the user experience information for the initial computing power service to the management center.

S203, initiating a corresponding measurement according to the user experience information, determining an adjusted computing power service routing strategy according to a measurement result and sending the adjusted computing power service routing strategy to the terminal device, or sending feedback information to the terminal device.

In this embodiment, after receiving the user experience information, the management center can initiate the corresponding measurement according to the user experience information, where the measurement can include at least one of a capability measurement of the terminal device, a computing capability measurement of the computing power node, a quality measurement of a network service, etc. Then, the management center can determine the cause that leads to the problems in user experience based on a result of the measurement, and adjust the computing power service routing strategy. When adjusting the computing power service routing strategy, the management center can consider the computing power resource status, network resource status, etc., and finally obtain the adjusted computing power service routing strategy and send it to the terminal device, or send feedback information to the terminal device, such as the cause that leads to the problems in user experience and/or improvement suggestions, etc.

In the fixed network scenario, the management center sends the adjusted computing power service routing strategy or the feedback information to the terminal device. In the mobile communication network scenario, the management center can send the adjusted computing power service routing strategy or the feedback information to the RAN entity, and the RAN entity sends the adjusted computing power service routing strategy or the feedback information to the management center.

In the method for processing computing power and network services of the embodiment, an initial computing power service routing strategy is determined by a management center according to a business requirement of a terminal device, and the initial computing power service routing strategy is sent to the terminal device. After the terminal device accesses a corresponding initial computing power service according to the initial computing power service routing strategy, user experience information for the initial computing power service sent by the terminal device is received. A corresponding measurement is initiated according to the user experience information, an adjusted computing power service routing strategy is determined according to a measurement result and is sent to the terminal device, or feedback information is sent to the terminal device. By obtaining the user experience information for the initial computing power service and performing the corresponding measurement, the computing power service routing strategy is adjusted or information is fed back, thereby enhancing the user experience of the computing power service in a targeted manner, while more fully and reasonably utilizing computing and network resources, optimizing resource allocation, and more efficiently exerting the value of computing and network resources.

In an optional embodiment, based on any of the above embodiments, as shown in FIG. 3, S202 of receiving the user experience information for the initial computing power service sent by the terminal device after the terminal device accesses the corresponding initial computing power service according to the initial computing power service routing strategy can specifically include:
S301, sending a user experience event subscription message to the terminal device after the terminal device accesses the corresponding initial computing power service according to the initial computing power service routing strategy, where the user experience event subscription message includes a user experience event type for the initial computing power service.

In this embodiment, the management center can subscribe to the user experience information in a subscription manner. That is, after the terminal device accesses the initial computing power service, the management center can send the user experience event subscription message to the terminal device. The user experience event subscription message includes the user experience event type for the initial computing power service. Of course, the user experience event subscription message can also include one or more of following items: an identifier of the user experience event subscription message, an identifier of the terminal device, an identifier of an application used for accessing the initial computing power service, and a deadline for user experience event subscription (such as expiration time of the computing power service, or a certain time point before the expiration deadline of the computing power service), etc.

Optionally, the user experience event type includes one or more of the following:
startup time of an application used for accessing the initial computing power service exceeding a first preset duration; or
the number of restarts of the application used for accessing the initial computing power service exceeding a first preset number of times; or
during a process of service execution through the initial computing power service, the number of lags exceeding a second preset number of times; or
during a process of service execution through the initial computing power service, a single-lag time exceeding a second preset duration; or
during a process of service execution through the initial computing power service, the number of failed executions exceeding a third preset number of times; or
a connection-establishment delay for accessing the initial computing power service exceeding a third preset duration; or
a connection-establishment success rate for accessing the initial computing power service being lower than a preset success rate; or
a connection-interruption frequency for accessing the initial computing power service exceeding a preset frequency.

In the fixed network scenario, the management center can directly send the user experience event subscription message to the terminal device. In the mobile communication network scenario, the management center can send a user experience event subscription message to the RAN entity, and the RAN entity sends the user experience event subscription message to the terminal device.

Furthermore, optionally, after the terminal device accesses the initial computing power service, for the convenience of management, the management center can also establish a computing power service mapping relationship, where the computing power service mapping relationship is a mapping relationship among one or more of an identifier of the terminal device, an identifier of an application used for accessing the initial computing power service, an identifier of a computing power node hosting the initial computing power service, and an identifier of the initial computing power service. When sending the user experience event subscription message to the terminal device, the management center can determine required information in the user experience event subscription message according to the computing power service mapping relationship, and then send the user experience event subscription message to the terminal device.

S302: receiving the user experience information sent by the terminal device after the user experience event type is triggered, where the user experience information includes user experience data related to the user experience event type.

In this embodiment, the terminal device can determine whether the user experience event type is triggered according to the user experience event subscription message, and send user experience information to the management center when the user experience event type is triggered. The user experience information includes the user experience data related to the user experience event type. Optionally, the user experience data includes one or more of the following:
the startup time of the application used for accessing the initial computing power service; or
the number of restarts of the application used for accessing the initial computing power service; or
the number of lags and a monitoring period during the process of service execution through the initial computing power service; or
the single-lag time during the process of service execution through the initial computing power service; or
the number of failed executions and a monitoring period during the process of service execution through the initial computing power service; or
the connection-establishment delay for accessing the initial computing power service; or
the connection-establishment success rate for accessing the initial computing power service; or
the connection-interruption frequency for accessing the initial computing power service.

In the fixed network scenario, the terminal device sends the user experience information to the management center. In the mobile communication network scenario, the terminal device sends the user experience information to the RAN entity, and the RAN entity sends the user experience information to the management center.

In another optional embodiment, based on any of the above embodiments, S202 of receiving the user experience information for the initial computing power service sent by the terminal device after the terminal device accesses the corresponding initial computing power service according to the initial computing power service routing strategy can specifically include:
receiving the user experience information for the initial computing power service actively sent by the terminal device after the terminal device accesses the corresponding initial computing power service according to the initial computing power service routing strategy, where the user experience information is subjective perception information of the user for the initial computing power service.

In this embodiment, after the terminal device accesses the initial computing power service, the user can actively feedback the user experience information for the initial computing power service to the management center, for example, through an application on the terminal device (such as an application used for accessing the initial computing power service), a phone call, a browser, etc. The user experience information fed back by the user can be subjective perception information of the user for the initial computing power service, such as whether the user is satisfied with the initial computing power service, how the user rates his satisfaction, existing problems (such as too slow speed, unclear content, lags, audio and video out of sync, etc.), whether the user intends to continue using the initial computing power service, suggestions, etc.

In the fixed network scenario, the terminal device sends the user experience information to the management center. In the mobile communication network scenario, the terminal device sends the user experience information to the RAN entity, and the RAN entity sends the user experience information to the management center.

In another optional embodiment, based on any of the above embodiments, S202 of receiving the user experience information for the initial computing power service sent by the terminal device after the terminal device accesses the corresponding initial computing power service according to the initial computing power service routing strategy can specifically include:
after the terminal device accesses the corresponding initial computing power service according to the initial computing power service routing strategy, sending a user experience information collection request for the initial computing power service to the terminal device, and the terminal device responds to the user experience information collection request by sending the user experience information for the initial computing power service, where the user experience information is subjective perception information of the user for the initial computing power service.

In this embodiment, after the terminal device accesses the initial computing power service, the management center can send the user experience information collection request for the initial computing power service to the terminal device in real time or periodically. Upon receiving the user experience information collection request, the terminal device can forward the user experience information entered by the user to the management center. The user experience information is as stated above, and can be the subjective perception information of the user for the initial computing power service, such as whether the user is satisfied with the initial computing power service, how the user rates his satisfaction, existing problems (such as too slow speed, unclear content, lags, audio and video out of sync, etc.), whether the user intends to continue using the initial computing power service, suggestions, etc.

In the fixed network scenario, the management center sends the user experience information collection request to the terminal device, and the terminal device sends the user experience information to the management center. In the mobile communication network scenario, the management center sends the user experience information collection request to the RAN entity, the RAN entity sends the user experience information collection request to the terminal device, the terminal device sends the user experience information to the RAN entity, and the RAN entity sends the user experience information to the management center.

Based on any of the above embodiments, S203 of initiating the corresponding measurement according to the user experience information can specifically include:
performing cause analysis according to the user experience information, determining a measurement task according to a result of the analysis, and performing the measurement task, where the measurement task includes at least one of: a capability measurement of the terminal device, a computing capability measurement of a computing power node, and a quality measurement of a network service.

In this embodiment, after receiving the user experience information, the cause analysis can be performed based on the user experience information, a predicted cause that triggers a relevant user experience event type (that is, the most likely cause) can be determined, and then the measurement task corresponding to the predicted cause is determined to verify whether the predicted cause is accurate. The predicted cause may be one or more of: a problem of the terminal device's capability, a problem of the initial computing power service's computing capability, or a problem of the network service's quality. Then, the corresponding measurement task is executed for verification.

More specifically, the performing the cause analysis according to the user experience information, determining the measurement task according to the result of the analysis, and performing the measurement task can include:
determining a predicted cause that triggers the user experience event type according to the user experience information, determining a measurement task corresponding to the predicted cause as a highest priority measurement task, and executing the highest priority measurement task;
after executing the highest priority measurement task, if the predicted cause is determined to be an actual cause that triggers the user experience event type, then terminating the measurement task; or
if the predicted cause is determined not to be the actual cause that triggers the user experience event type, then executing a further measurement task.

In this embodiment, the predicted cause is merely the most likely cause that triggers the user experience event type, and it may not be accurate. It is possible that other causes have triggered the user experience event type. Therefore, in this embodiment, when determining the measurement task, only the measurement task corresponding to the predicted cause is taken as the highest priority measurement task, and the highest priority measurement task is prioritized. That is, the predicted cause is verified first. If the verification confirms that the predicted cause is indeed the actual cause that triggers the user experience event type, then the measurement task is terminated and no other measurement tasks will be executed; otherwise, if it is determined that the predicted cause is not the actual cause that triggers the user experience event type, then other measurement tasks shall be executed to determine the actual cause that triggers the user experience event type.

Optionally, when determining the predicted cause that triggers the user experience event type according to the user experience information, the specific steps may include:
if the user experience information is relevant information pertaining to an application used for accessing the initial computing power service, then determining that the predicted cause that triggers the user experience event type is an insufficient capability of the terminal device; or
if the user experience information is relevant information pertaining to a lag or an execution failure during a process of service execution through the initial computing power service, then determining that the predicted cause that triggers the user experience event type is an insufficient computing capability of the initial computing power service (such as excessive load of the initial computing power service) and/or an insufficient quality of the network service (such as insufficient network bandwidth); or
if the user experience information is a connection problem in accessing the initial computing power service, then determining that the predicted cause that triggers the user experience event type is an insufficient network-access capability of the terminal device or a terminal device type mismatch.

Based on the above embodiments, S203 of determining the adjusted computing power service routing strategy according to the measurement result and sending the adjusted computing power service routing strategy to the terminal device, or sending the feedback information to the terminal device can specifically include:
if the actual cause that triggers the user experience event type is determined to be a network cause according to the measurement result, then determining a new computing power service routing strategy to reach the initial computing power service. That is, the initial computing power service remains unchanged, and a routing path for the terminal device to access the initial computing power service is changed. In this way, the new computing power service routing strategy to reach the initial computing power service is obtained for the terminal device and sent to the terminal device.

Alternatively, if the actual cause that triggers the user experience event type is determined to be an initial computing power service cause according to the measurement result, then determining a new computing power service, and determining a new computing power service routing strategy to reach the new computing power service. That is, the initial computing power service is replaced with the new computing power service, accordingly, the computing power service routing strategy also needs to be updated to the new computing power service routing strategy to reach the new computing power service, and the new computing power service routing strategy is sent to the terminal device.

Alternatively, if the actual cause that triggers the user experience event type is determined to be the terminal device according to the measurement result, then sending the feedback information to the terminal device. The feedback information includes the actual cause and/or a solution, to help the user solve the problem.

Alternatively, if the actual cause that triggers the user experience event type is determined to be the terminal device according to the measurement result, then determining a new computing power service routing strategy to reach a new computing power service according to a capability of the terminal device, computing power resource status, and network resource status. That is, when the capability of the terminal device is insufficient, the management center can, according to the computing power resource status and the network resource status, orchestrate a new computing power service and a new network resource that match the terminal device's capability for the terminal device, determine the new computing power service routing strategy to reach the new computing power service, and send the new computing power service routing strategy to the terminal device.

Alternatively, if the actual cause that triggers the user experience event type is determined to be the terminal device according to the measurement result, and the terminal device is determined to be incapable of capability enhancement (e.g., it is found that the capability of the terminal device has remained unchanged or has not improved after long-term monitoring of the terminal device's capability reports), then determining a new computing power service with a lower computing capability than the initial computing power service, determining a new computing power service routing strategy to reach the new computing power service. That is, due to the terminal device's inability to enhance its capability, in order to avoid waste of computing and network resources, a new computing power service with relatively lower computing capability can be orchestrated for the terminal device, and the new computing power service routing strategy to reach the new computing power service can be determined for the terminal device, and the new computing power service routing strategy is sent to the terminal device, while releasing the initial computing power service to other more urgent businesses, so as to fully and reasonably utilize the computing and network resources, save resource costs, and optimize resource allocation.

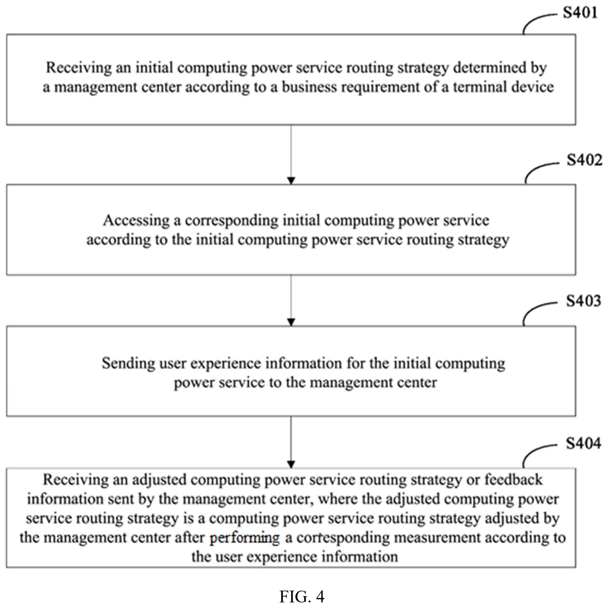

FIG. 4 is a flowchart of a method for processing computing power and network services provided by an embodiment. As shown in FIG. 2, the embodiment provides a method for processing computing power and network services, with an execution entity being a terminal device. It is a method embodiment on a terminal device side corresponding to the above-mentioned embodiments.

The specific steps of the method are as follows:
S401, receiving an initial computing power service routing strategy determined by a management center according to a business requirement of the terminal device;
S402, accessing a corresponding initial computing power service according to the initial computing power service routing strategy;
S403, sending user experience information for the initial computing power service to the management center;
S404, receiving an adjusted computing power service routing strategy or feedback information sent by the management center, where the adjusted computing power service routing strategy is a computing power service routing strategy adjusted by the management center after performing a corresponding measurement according to the user experience information.

In an optional embodiment, the sending the user experience information for the initial computing power service to the management center in S403 includes:
receiving a user experience event subscription message sent by the management center, where the user experience event subscription message includes a user experience event type for the initial computing power service;
determining whether the user experience event type is triggered;
upon determining that the user experience event type is triggered, sending the user experience information for the initial computing power service to the management center.

Optionally, in a mobile communication network scenario, the receiving the user experience event subscription message sent by the management center includes:
receiving the user experience event subscription message sent by a RAN entity, where the user experience event subscription message is sent by the management center to the RAN entity;
the sending the user experience information for the initial computing power service to the management center includes:
   sending the user experience information for the initial computing power service to the RAN entity, to enable the RAN entity to send the user experience information for the initial computing power service to the management center.

In another optional embodiment, sending the user experience information for the initial computing power service to the management center in S403 includes:
actively sending the user experience information for the initial computing power service to the management center, where the user experience information is subjective perception information of the user for the initial computing power service; or
receiving a user experience information collection request for the initial computing power service sent by the management center, and sending the user experience information for the initial computing power service to the management center in response to the user experience information collection request, where the user experience information is subjective perception information of the user for the initial computing power service.

Optionally, in the mobile communication network scenario, the actively sending the user experience information for the initial computing power service to the management center includes:
actively sending the user experience information for the initial computing power service to a RAN entity, to enable the RAN entity to send the user experience information for the initial computing power service to the management center; or
the receiving the user experience information collection request for the initial computing power service sent by the management center, and sending the user experience information for the initial computing power service to the management center in response to the user experience information collection request, includes:
   receiving the user experience information collection request for the initial computing power service sent by a RAN entity, where the user experience information collection request is actively sent by the terminal device to the RAN entity; in response to the user experience information collection request, sending the user experience information for the initial computing power service to the RAN entity, to enable the RAN entity to send the user experience information for the initial computing power service to the management center.

Based on any of the above embodiments, the method further includes:
when the management center initiates a computing capacity measurement of the terminal device, obtaining one or more of a load size, a computing power resource size, and a computing power resource utilization rate of the terminal device, and sending to the management center; or
when the management center initiates a network-access capability measurement of the terminal device, obtaining one or more of a wireless access capability of the terminal device and a terminal device type, and sending to the management center.

Optionally, in the mobile communication network scenario, the receiving the adjusted computing power service routing strategy or the feedback information sent by the management center includes:
receiving the adjusted computing power service routing strategy or the feedback information sent by a RAN entity, where the adjusted computing power service routing strategy or the feedback information is sent by the management center to the RAN entity.

Based on any of the above embodiments, the accessing the corresponding initial computing power service according to the initial computing power service routing strategy includes:
initiating an application used for accessing the initial computing power service, and accessing the initial computing power service through the application.

Based on any of the above embodiments, before receiving the initial computing power service routing strategy determined by the management center according to the business requirement of the terminal device, the method further includes:
in a fixed network scenario, the terminal device sends the business requirement to the management center; or
in the mobile communication network scenario, the terminal device sends the business requirement to a RAN entity to enable the RAN entity to send the business requirement to the management center.

The method embodiments on the terminal device side correspond to the method embodiments on the management center side. The principles and technical effects can be found in the above embodiments, and will not be repeated here.

Below, through specific examples, a detailed description of the above process of the embodiments of the present disclosure will be provided.

### Example One

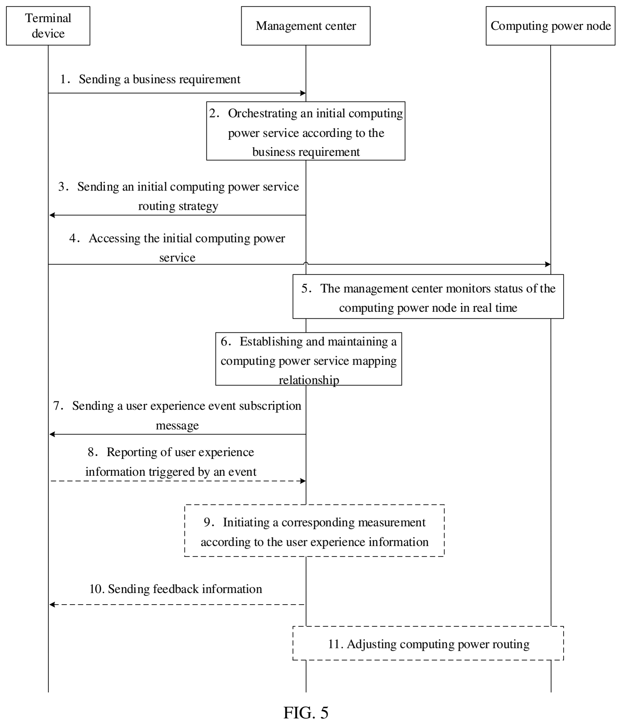

As shown in a signaling diagram of a method for processing computing power and network services in FIG. 5, the method for processing computing power and network services is applied to a fixed network scenario. The specific steps are shown below.
1) a terminal device sends a business requirement to a management center.
   The business requirement includes a computing power requirement, such as the type of required service, the amount of required service resources, etc., and the business requirement may also include a network requirement, such as a bandwidth requirement, a delay requirement, etc.
2) the management center orchestrates an initial computing power service for the terminal device according to the business requirement.
   The initial computing power service can be a computing resource of the computing power node or an application deployed on the computing power node.
3) the management center sends an initial computing power service routing strategy to the terminal device.
   In addition, the management center can also send an identifier of a computing power node hosting the initial computing power service and an identifier of the initial computing power service to the terminal device.
4) the terminal device accesses the initial computing power service.
   Optionally, the terminal device can launch an application (APP) used for accessing the initial computing power service, and then access the initial computing power service through the application.
5) the management center monitors status of the computing power node in real time.
6) when the management center detects that the terminal device accesses the initial computing power service, it establishes and maintains a computing power service mapping relationship.
   The computing power service mapping relationship is a mapping relationship among one or more of the identifier of the terminal device, the identifier of the application used for accessing the initial computing power service, the identifier of the computing power node hosting the initial computing power service, and the identifier of the initial computing power service.
7) the management center sends a user experience event subscription message to the terminal device.

The subscription message includes one or more of the following information:
an identifier of the user experience event subscription message, the identifier of the terminal device, the identifier of the application used for accessing the initial computing power service, the user experience event type, and a deadline for user experience event subscription (event reporting deadline, such as expiration time of the computing power service, or a certain time point before the expiration deadline of the computing power service).

The user experience event type includes one or more of the following information:
startup time of the application used for accessing the initial computing power service is too long (e.g., it exceeds a first preset duration, the specific time is determined according to an actual management requirement, and no specific limitation is imposed here);
the application used for accessing the initial computing power service has been restarted an excessive number of times (such as exceeding a second preset number of times, the specific number of times is determined according to the actual management requirement, and no specific limitation is imposed here);
the number of lags during a process of service execution through the initial computing power service is excessive (such as exceeding a second preset number of times, for example, for an initial computing power service related to video processing, since a visual delay sensing speed of human eyes is >= 40ms, when the video's lag duration is greater than 40ms, it is counted as one lag, or it can be specified according to the management requirement);
a single-lag time during the process of service execution through the initial computing power service is too long (such as exceeding a second preset duration, the specific time is determined according to the actual management requirement, and no specific limitation is imposed here);
the number of failed executions during the process of service execution through the initial computing power service is excessive (such as exceeding a third preset number of times, for example, the number of video playback failures exceeds the third preset number of times, the specific number of times is determined according to the actual management requirement, and no specific limitation is imposed here);
a connection-establishment delay for accessing the initial computing power service is too long (such as exceeding a third preset duration, the specific time is determined according to the actual management requirement, and no specific limitation is imposed here);
a connection-establishment success rate for accessing the initial computing power service is too low (the number of connection-establishment successes/a total number of connection-establishment attempts within a statistical period, the success rate is lower than the preset success, the specific data is determined according to the actual management requirements, and no specific limitation is imposed here);
a connection-interruption frequency for accessing the initial computing power service is too high (such as exceeding a preset frequency, the preset frequency can be the number of times of interruptions per minute, the specific data is determined according to the actual management requirements, and no specific limitation is imposed here);
...etc.;

8) the terminal device initiates status monitoring for the user experience event type according to the user experience event subscription message, and reports the user experience information to the management center when the user experience event type is triggered.

The user experience information includes user experience data related to the user experience event type, and the specific data includes one or more of the following information:
the startup time of the application used for accessing the initial computing power service;
the number of restarts of the application used for accessing the initial computing power service;
the number of lags and a monitoring period during the process of service execution through the initial computing power service, where the monitoring period can be precise down to seconds;
the single-lag time during the process of service execution through the initial computing power service;
the number of failed executions and a monitoring period during the process of service execution through the initial computing power service, where the monitoring period can be precise to the second;
the connection-establishment delay for accessing the initial computing power service;
the connection-establishment success rate for accessing the initial computing power service;
the connection-interruption frequency for accessing the initial computing power service.

9) The management center initiates a corresponding measurement according to the user experience information.

When the user experience data is the startup time of the application used for accessing the initial computing power service or the number of restarts of the application used for accessing the initial computing power service, a cause may be analyzed as insufficient computing power of the terminal device. At this time, a capability measurement of the terminal device is performed on the terminal device side, such as one or more of a terminal device's load, a computing power resource size, and a computing power resource utilization rate, etc. If it is confirmed after measurement that it is not due to insufficient computing power of the terminal device, then a measurement can be performed on the computing power node side and/or a quality measurement of a network service can be performed.

When the user experience data is the number of lags, the single-lag time, the number of failed executions during a process of service execution through the initial computing power service, the cause may be analyzed as insufficient network bandwidth or excessive load of the initial computing power service, which leads to poor user experience. At this time, a computing capability measurement of the computing power node is performed on the business side, such as measuring one or more of the load of the computing power node, a computing power node resource utilization rate, and the current status of the computing power service, etc.; and/or, a QoS measurement is performed in the network, such as one or more of a rate, a bandwidth, and a delay. If it is confirmed after measurement that it is not a problem of the network or the initial computing power service, then a measurement can be performed on the terminal device side.

When the user experience data is the connection-establishment delay, connection-establishment success rate, or connection-interruption frequency, the cause may be analyzed as the network access cause or mismatch of terminal device type. At this time, a terminal capability measurement is performed on the terminal device side, such as testing one or more of the network-access capability of the terminal device and the terminal type, etc.

10) The management center conducts user feedback according to the measurement result.

11) The management center adjusts the computing power routing strategy according to the measurement result.

Steps 10 and 11 do not strictly distinguish the sequence of execution, and can be executed in the order of step 11 first and then step 10, or they can be executed simultaneously; or in some cases, only step 10 is executed without step 11, and in some cases, only step 11 is executed without step 10.

The management center analyzes the actual cause that leads to poor user experience according to the measurement result, and then according to the result of the analysis, provides relevant feedback (including feedback on the result of the analysis, and/or an identifier of a computing power node adjusted, an identifier of a computing power service, etc.) or adjusts the computing power routing strategy.

When the actual cause is a network-side cause that leads to poor user experience, the management center adjusts a computing power scheduling strategy in real time, without changing the initial computing power service. It changes a routing path for the terminal device to access the initial computing power service, and generates a new computing power routing strategy (forwarding path) to reach the initial computing power node/the initial computing power service.

When the user experience is poor due to the computing power cause on the business side, the management center selects a better computing power node or computing power service, and generates a new computing power routing strategy (forwarding path) to reach the new computing power node/new computing power service.

When the user experience is poor due to the terminal device itself, such as insufficient computing power, excessive service load, insufficient wireless access capability, mismatched terminal type, etc., a cause code can be fed back to the terminal device to explain the current configuration, possible causes for poor user experience, and an improvement suggestion; or at the same time, the computing power routing strategy is adjusted in accordance with the computing power resource status, network resource status, and the terminal device's capability, a new computing power node/new computing power service that matches the terminal device's capability is orchestrated, and a new computing power routing strategy (forwarding path) to reach the new computing power node/new computing power service is generated.

Alternatively, when the user experience is poor due to the terminal device itself and the terminal device is temporarily unable to improve its capability (e.g., it is found that the capability of the terminal device has remained unchanged or has not improved after long-term monitoring of the terminal device's capability reports), the computing power scheduling strategy can be adjusted, an original business is switched to a computing power node that can meet the user's requirement and has lower computing power, the resources of the original computing power node are released for other users' more urgent businesses. This saves resource costs, and achieves full and reasonable utilization of computing and network resources, optimizes resource allocation.

### Example 2

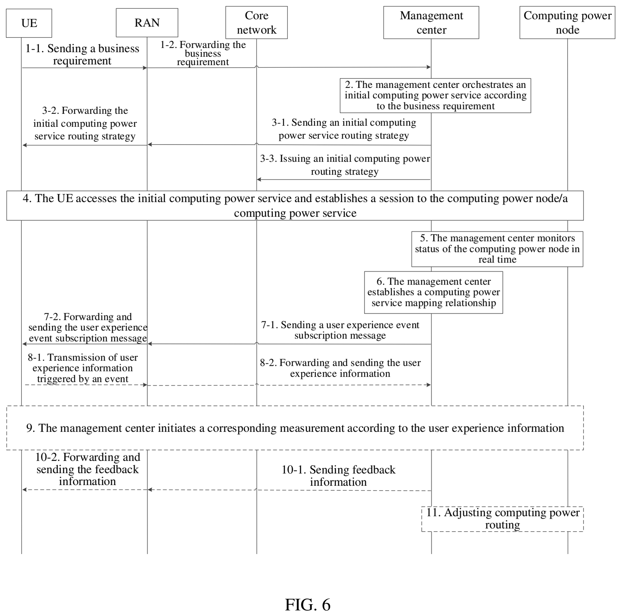

A signaling diagram of a method for processing computing power and network services as shown in FIG. 6, the method for processing computing power and network services is applied to the mobile communication network scenario. Where UE represents UE. The specific steps are as follows:
1) the UE proposes a business requirement; where the business requirement can include a computing power requirement, such as the type of required service, the amount of the required service resources, etc., and the business requirement can also include a network requirement, such as a bandwidth requirement, a delay requirement, etc.. It specifically includes:
   1-1) the UE sends the business requirement to a RAN entity;
   1-2) the RAN entity forwards the business requirement to a management center;
2) the management center orchestrates an initial computing power service for the UE according to the business requirement.
   The initial computing power service can be the computing resource of the computing power node, or the application deployed on the computing power node.
3) the management center responds to the business requirement.
   3-1) the management center sends the initial computing power service routing strategy to the RAN entity. In addition, the management center can also send an identifier of a computing power node hosting the initial computing power service and an identifier of the initial computing power service to the RAN entity;
   3-2) the RAN entity forwards the data received in step 3-1 to the UE;
   3-3) the management center sends the initial computing power service routing strategy to a core network entity, so that a user plane path can be established for the UE to access the initial computing power service.
4) the UE accesses the initial computing power service and establishes a session with the initial computing power service.
   The session of the UE with the initial computing power service can be established through UE-RAN-UPF (User Plane Function, user plane function) - core network - data network, the initial computing power service is hosted in the data network, for session creation, a session establishment process can be implemented by a SMF (Session Management Function, session management function) entity.
   Optionally, the UE can initiate an application (APP) for accessing the initial computing power service, and then access the initial computing power service through the application.
5) the management center monitors status of the computing power node in real time.
6) when the management center detects that the UE accesses the initial computing power service, it establishes and maintains a computing power service mapping relationship.
   The computing power service mapping relationship is a mapping relationship among one or more of the identifier of the UE, the identifier of the application used for accessing the initial computing power service, the identifier of the computing power node hosting the initial computing power service, and the identifier of the initial computing power service;
7) the management center subscribes to a user experience event.
   7-1) the network management center sends a user experience event subscription message to the RAN entity;
   7-2) the RAN entity forwards the user experience event subscription message to the UE, where the user experience event subscription message can be the same as step 7 in Example 1.
8) the UE initiates status monitoring for the user experience event type according to the user experience event subscription message. When the user experience event type is triggered, the UE reports the user experience information to the management center. Here the user experience information can be the same as step 8 in Example 1.
   8-1) the UE sends the user experience information to the RAN entity;
   8-2) the RAN entity forwards the user experience information to the network management center.
9) The management center initiates a corresponding measurement according to the user experience information.

When the user experience data is the startup time of the application used for accessing the initial computing power service or the number of restarts of the application used for accessing the initial computing power service, a cause may be analyzed as insufficient computing power of the UE. At this time, a UE capability measurement is performed on the UE side, such as one or more of UE's load, a computing power resource size, and a computing power resource utilization rate, etc. If it is confirmed after measurement that it is not due to insufficient computing power of the UE, then a measurement can be performed on the computing power node side and/or a quality measurement of a network service can be performed.

When the user experience data is the number of lags, the single-lag time, the number of failed executions during a process of service execution through the initial computing power service, the cause may be analyzed as insufficient network bandwidth or excessive load of the initial computing power service, which leads to poor user experience. At this time, a computing capability measurement of the computing power node is performed on the business side, such as measuring one or more of the load of the computing power node, a computing power node resource utilization rate, and the current status of the computing power service, etc.; and/or, a QoS measurement is performed in the network, such as one or more of a rate, a bandwidth, and a delay. If it is confirmed after measurement that it is not a problem of the network or the initial computing power service, then a measurement can be performed on the UE side.

When the user experience data is the connection-establishment delay, connection-establishment success rate, or connection-interruption frequency, the cause may be analyzed as the network access cause or mismatch of UE type. At this time, a terminal capability measurement is performed on the UE side, such as testing one or more of the network-access capability of the UE and the terminal type, etc.

10) the management center conducts user feedback according to the measurement result.
10-1) the network management center sends feedback information to the RAN entity (including feedback on the result of the analysis, and/or an identifier of a computing power node adjusted, an identifier of a computing power service, etc.);
10-2) the RAN entity forwards the feedback information to the UE.

11) The management center adjusts the computing power routing strategy according to the measurement result.

Steps 10 and 11 do not strictly distinguish the sequence of execution, and can be executed in the order of step 11 first and then step 10, or they can be executed simultaneously; or in some cases, only step 10 is executed without step 11, and in some cases, only step 11 is executed without step 10.

The method for providing feedback to the user or the method for adjusting the computing power scheduling strategy is the same as steps 10-11 in Example 1.

### Example 3

This example provides another method for processing computing power and network services. The difference between this example and Examples 1 and 2 lies in that the terminal device can actively send user experience information for an initial computing power service to the management center, such as through an application on the terminal device, a phone call, a browser, etc., or the management center can send user experience information collection requests for the initial computing power service to the terminal device in a real-time or periodically. After receiving the user experience information collection request, the terminal device sends the user experience information for the initial computing power service to the management center, where the user experience information for the initial computing power service can be the subjective perception information of the user for the initial computing power service, for example, the user experience information can include one or more of the following:
whether the user is satisfied with the initial computing power service;
the satisfaction level for the initial computing power service (the specific level is set according to actual requirements, such as a 5-point scale, or star-rating, etc.);
the existing problems of the initial computing power service (such as too slow speed, unclear content, lags, audio and video out of sync, etc.);
whether the user intends to continue using the initial computing power service;
suggestions related to the initial computing power service, etc.

In this example, the terminal device reports the business requirement, the management center determines the initial computing power service routing strategy according to the business requirement of the terminal device, and sends it to the terminal device, and the steps of the terminal device accessing the initial computing power service and so on, are the same as those from step 1 to step 6 in Examples 1 or 2, and the steps of the management center initiating a response measurement according to the user experience information fed back by the terminal device, adjusting the computing power routing strategy and/or providing feedback are the same as those from step 9 to step 11 in Examples 1 or 2.

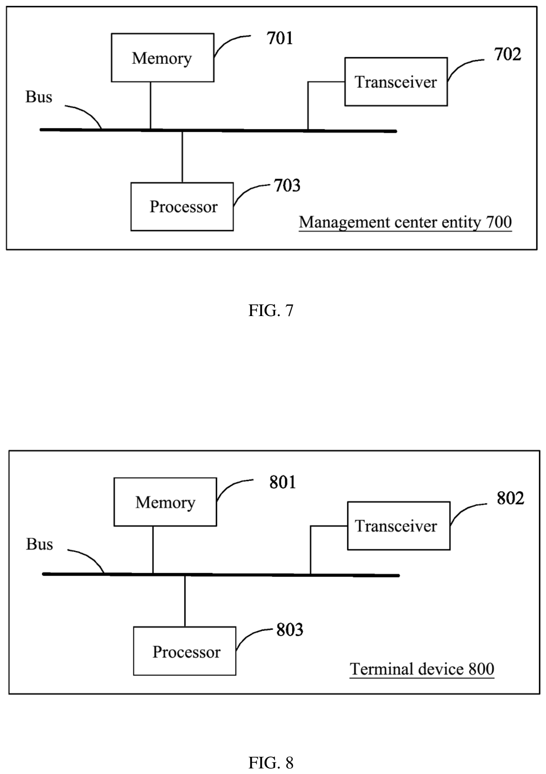

FIG. 7 is a structural diagram of a management center entity provided by an embodiment of the present disclosure. The management center entity provided by the embodiment can execute a processing flow provided by the method embodiments on the management center side. As shown in FIG. 7, the management center entity 700 includes a memory 701, a transceiver 702, and a processor 703.

In FIG. 7, a bus architecture can include any number of interconnected buses and bridges, specifically linked together by one or more processors represented by a processor 703 and various circuits of a memory represented by a memory 701. The bus architecture can also link together various other circuits such as peripheral devices, voltage stabilizers, and power management circuits, which are all well-known in the field, and will not be further described herein. A bus interface provides an interface. A transceiver 702 can be multiple components, namely including a transmitter and a receiver, providing units for communicating with various other apparatus on transmission mediums, these transmission mediums include transmission mediums such as wireless channels, wired channels, optical cables, etc. The processor 703 is responsible for managing the bus architecture and general processing, and the memory 701 can store data used by the processor 703 when executing operations.

The processor 703 can be a central processing unit (CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD). The processor can also adopt a multi-core architecture.

The memory 701 is configured to store a computer program. The transceiver 702 is configured to receive and transmit data under control of the processor 703. The processor 703 is configured to read the computer program in the memory 701 and execute the following operations:
determining an initial computing power service routing strategy according to a business requirement of a terminal device, and sending the initial computing power service routing strategy to the terminal device;
after the terminal device accesses a corresponding initial computing power service according to the initial computing power service routing strategy, receiving user experience information for the initial computing power service sent by the terminal device;
initiating a corresponding measurement according to the user experience information, determining an adjusted computing power service routing strategy according to a measurement result and sending the adjusted computing power service routing strategy to the terminal device, or sending feedback information to the terminal device.

Optionally, when receiving the user experience information for the initial computing power service sent by the terminal device after the terminal device accesses the corresponding initial computing power service according to the initial computing power service routing strategy, the processor 703 is configured to:
send a user experience event subscription message to the terminal device after the terminal device accesses the corresponding initial computing power service according to the initial computing power service routing strategy, where the user experience event subscription message includes a user experience event type for the initial computing power service;
receive the user experience information sent by the terminal device after the user experience event type is triggered, where the user experience information includes user experience data related to the user experience event type.

Optionally, the user experience event type includes one or more of the following:
startup time of an application used for accessing the initial computing power service exceeding a first preset duration; or
a number of restarts of the application used for accessing the initial computing power service exceeding a first preset number of times; or
during a process of service execution through the initial computing power service, a number of lags exceeding a second preset number of times; or
during a process of service execution through the initial computing power service, a single-lag time exceeding a second preset duration; or
during a process of service execution through the initial computing power service, a number of failed executions exceeding a third preset number of times; or
a connection-establishment delay for accessing the initial computing power service exceeding a third preset duration; or
a connection-establishment success rate for accessing the initial computing power service being lower than a preset success rate; or
a connection-interruption frequency for accessing the initial computing power service exceeding a preset frequency.

Optionally, the user experience data includes one or more of the following:
the startup time of the application used for accessing the initial computing power service; or
the number of restarts of the application used for accessing the initial computing power service; or
the number of lags and a monitoring period during the process of service execution through the initial computing power service; or
the single-lag time during the process of service execution through the initial computing power service; or
the number of failed executions and a monitoring period during the process of service execution through the initial computing power service; or
the connection-establishment delay for accessing the initial computing power service; or
the connection-establishment success rate for accessing the initial computing power service; or
the connection-interruption frequency for accessing the initial computing power service.

Optionally, after the terminal device accesses the corresponding initial computing power service according to the initial computing power service routing strategy, the processor 703 is further configured to:
establish a computing power service mapping relationship, where the computing power service mapping relationship is a mapping relationship among one or more of an identifier of the terminal device, an identifier of an application used for accessing the initial computing power service, an identifier of a computing power node hosting the initial computing power service, and an identifier of the initial computing power service;
when sending the user experience event subscription message to the terminal device, the processor 703 is configured to:
   send the user experience event subscription message to the terminal device according to the computing power service mapping relationship.

Optionally, the user experience event subscription message further includes one or more of the following:
an identifier of the user experience event subscription message, an identifier of the terminal device, an identifier of an application used for accessing the initial computing power service, and a deadline for user experience event subscription.

Optionally, when sending the user experience event subscription message to the terminal device, the processor 703 is configured to:
send the user experience event subscription message to a radio access network RAN entity, to enable the RAN entity to send the user experience event subscription message to the terminal device;
when receiving the user experience information sent by the terminal device after the user experience event type is triggered, the processor 703 is configured to:
   receive the user experience information sent by the RAN entity, where the user experience information is sent by the terminal device to the RAN entity.

Optionally, when receiving the user experience information for the initial computing power service sent by the terminal device after the terminal device accesses the corresponding initial computing power service according to the initial computing power service routing strategy, the processor 703 is configured to:
receive the user experience information for the initial computing power service actively sent by the terminal device after the terminal device accesses the corresponding initial computing power service according to the initial computing power service routing strategy, where the user experience information is subjective perception information of the user for the initial computing power service; or
after the terminal device accesses the corresponding initial computing power service according to the initial computing power service routing strategy, send a user experience information collection request for the initial computing power service to the terminal device, and the terminal device responds to the user experience information collection request by sending the user experience information for the initial computing power service, where the user experience information is subjective perception information of the user for the initial computing power service.

Optionally, when receiving the user experience information for the initial computing power service actively sent by the terminal device, the processor 703 is configured to:
receive the user experience information sent by a RAN entity, where the user experience information is actively sent by the terminal device to the RAN entity; or
when sending the user experience information collection request for the initial computing power service to the terminal device, and receiving the user experience information for the initial computing power service that the terminal device sends in response to the user experience information collection request, the processor 703 is configured to:
   send the user experience information collection request to the RAN entity to enable the RAN entity to send the user experience information collection request to the terminal device, and receive the user experience information sent by the RAN entity, where the user experience information is information that the terminal device sends to the RAN entity in response to the user experience information collection request.

Optionally, when initiating the corresponding measurement according to the user experience information, the processor 703 is configured to:
perform cause analysis according to the user experience information, determine a measurement task according to a result of the analysis, and perform the measurement task, where the measurement task includes at least one of: a capability measurement of the terminal device, a computing capability measurement of a computing power node, and a quality measurement of a network service.

Optionally, when performing the cause analysis according to the user experience information, determining the measurement task according to the result of the analysis, and performing the measurement task, the processor 703 is configured to:
determine a predicted cause that triggers the user experience event type according to the user experience information, determine a measurement task corresponding to the predicted cause as a highest priority measurement task, and execute the highest priority measurement task;
after executing the highest priority measurement task, if the predicted cause is determined to be an actual cause that triggers the user experience event type, then end the measurement task; or
if the predicted cause is determined not to be the actual cause that triggers the user experience event type, then execute a further measurement task.

Optionally, when determining the predicted cause that triggers the user experience event type according to the user experience information, the processor 703 is configured to:
if the user experience information is relevant information pertaining to an application used for accessing the initial computing power service, then determine that the predicted cause that triggers the user experience event type is an insufficient capability of the terminal device; or
if the user experience information is relevant information pertaining to a lag or an execution failure during a process of service execution through the initial computing power service, then determine that the predicted cause that triggers the user experience event type is an insufficient computing capability of the initial computing power service and/or an insufficient quality of the network service; or
if the user experience information is a connection problem in accessing the initial computing power service, then determine that the predicted cause that triggers the user experience event type is an insufficient network-access capability of the terminal device or a terminal device type mismatch.

Optionally, when determining the adjusted computing power service routing strategy according to the measurement result and sending the adjusted computing power service routing strategy to the terminal device, or when sending feedback information to the terminal device, the processor 703 is configured to:
if the actual cause that triggers the user experience event type is determined to be a network cause according to the measurement result, then determine a new computing power service routing strategy to reach the initial computing power service, and send the new computing power service routing strategy to the terminal device; or
if the actual cause that triggers the user experience event type is determined to be an initial computing power service cause according to the measurement result, then determine a new computing power service, determine a new computing power service routing strategy to reach the new computing power service, and send the new computing power service routing strategy to the terminal device; or
if the actual cause that triggers the user experience event type is determined to be the terminal device according to the measurement result, then send the feedback information to the terminal device, where the feedback information includes the actual cause and/or a solution; or
if the actual cause that triggers the user experience event type is determined to be the terminal device according to the measurement result, then determine a new computing power service routing strategy to reach a new computing power service according to a capability of the terminal device, computing power resource status, and network resource status, and send the new computing power service routing strategy to the terminal device; or
if the actual cause that triggers the user experience event type is determined to be the terminal device according to the measurement result, and the terminal device is determined to be incapable of capability enhancement, then determine a new computing power service with a lower computing capability than the initial computing power service, determine a new computing power service routing strategy to reach the new computing power service, and send the new computing power service routing strategy to the terminal device.

Optionally, when determining the adjusted computing power service routing strategy according to the measurement result and sending the adjusted computing power service routing strategy to the terminal device, or when sending feedback information to the terminal device, the processor 703 is configured to:
determine the adjusted computing power service routing strategy according to the measurement result, and send the adjusted computing power service routing strategy to a RAN entity, to enable the RAN entity to send the adjusted computing power service routing strategy to the terminal device; or
send the feedback information to a RAN entity, to enable the RAN entity to send the feedback information to the terminal device.

Optionally, when determining the initial computing power service routing strategy according to the business requirement of the terminal device, the processor 703 is configured to:
receive the business requirement sent by the terminal device, and determine an initial service routing strategy according to the business requirement; or
receive the business requirement sent by a RAN entity, and determine an initial service routing strategy according to the business requirement, where the business requirement is sent by the terminal device to the RAN entity.

Optionally, when sending the initial computing power service routing strategy to the terminal device, the processor 703 is configured to:
send the initial computing power service routing strategy to a RAN entity, to enable the RAN entity to send the initial computing power service routing strategy to the terminal device.

Optionally, the processor 703 is further configured to:
send the initial computing power service routing strategy to a core network entity, to enable establishment of a user plane path according to the initial computing power service routing strategy for the terminal device to access the initial computing power service corresponding to the initial computing power service routing strategy.

Optionally, when sending the initial computing power service routing strategy to the terminal device, the processor 703 is configured to:
send an identifier of a computing power node hosting the initial computing power service and an identifier of the initial computing power service to the terminal device.

The management center entity provided by the embodiments of the present disclosure can specifically be configured to execute the above method embodiments on the management center side, and the specific functions are not described here again.

FIG. 8 shows is a structural diagram of a terminal device provided by an embodiment of the present disclosure. The terminal device provided by the embodiment can execute a processing flow provided by the method embodiments of a terminal device side. As shown in FIG. 8, the terminal device 800 includes a memory 801, a transceiver 802, and a processor 803.

In FIG. 8, a bus architecture can include any number of interconnected buses and bridges, specifically linked together by one or more processors represented by a processor 803 and various circuits of a memory represented by a memory 801. The bus architecture can also link together various other circuits such as peripheral devices, voltage stabilizers, and power management circuits, which are all well-known in the field, and will not be further described herein. A bus interface provides an interface. A transceiver 802 can be multiple components, namely including a transmitter and a receiver, providing units for communicating with various other apparatus on transmission mediums, these transmission mediums include transmission mediums such as wireless channels, wired channels, optical cables, etc. The processor 803 is responsible for managing the bus architecture and generally processing, and the memory 801 can store data used by the processor 803 when executing operations.

The processor 803 can be a central processing unit (CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD). The processor can also adopt a multi-core architecture.

The memory 801 is configured to store a computer program. The transceiver 802 is configured to receive and transmit data under control of the processor 803. The processor 803 is configured to read the computer program in the memory 801 and execute the following operations:
receiving an initial computing power service routing strategy determined by a management center according to a business requirement of the terminal device;
accessing a corresponding initial computing power service according to the initial computing power service routing strategy;
sending user experience information for the initial computing power service to the management center;
receiving an adjusted computing power service routing strategy or feedback information sent by the management center, where the adjusted computing power service routing strategy is a computing power service routing strategy adjusted by the management center after performing a corresponding measurement according to the user experience information.

Optionally, when sending the user experience information for the initial computing power service to the management center, the processor 803 is configured to:
receive a user experience event subscription message sent by the management center, where the user experience event subscription message includes a user experience event type for the initial computing power service;
determine whether the user experience event type is triggered;
upon determining that the user experience event type is triggered, send the user experience information for the initial computing power service to the management center.

Optionally, when receiving the user experience event subscription message sent by the management center, the processor 803 is configured to:
receive the user experience event subscription message sent by a RAN entity, where the user experience event subscription message is sent by the management center to the RAN entity;
when sending the user experience information for the initial computing power service to the management center, the processor 803 is configured to:
   send the user experience information for the initial computing power service to the RAN entity, to enable the RAN entity to send the user experience information for the initial computing power service to the management center.

Optionally, when sending the user experience information for the initial computing power service to the management center, the processor 803 is configured to:
actively send the user experience information for the initial computing power service to the management center, where the user experience information is subjective perception information of the user for the initial computing power service; or
receive a user experience information collection request for the initial computing power service sent by the management center, and send the user experience information for the initial computing power service to the management center in response to the user experience information collection request, where the user experience information is subjective perception information of the user for the initial computing power service.

Optionally, when actively sending the user experience information for the initial computing power service to the management center, the processor 803 is configured to:
actively send the user experience information for the initial computing power service to a RAN entity, to enable the RAN entity to send the user experience information for the initial computing power service to the management center; or
when receiving the user experience information collection request for the initial computing power service sent by the management center, and sending the user experience information for the initial computing power service to the management center in response to the user experience information collection request, the processor 803 is configured to:
   receive the user experience information collection request for the initial computing power service sent by a RAN entity, where the user experience information collection request is actively sent by the terminal device to the RAN entity; in response to the user experience information collection request, send the user experience information for the initial computing power service to the RAN entity, to enable the RAN entity to send the user experience information for the initial computing power service to the management center.

Optionally, the processor 803 is further configured to:
when the management center initiates a computing capacity measurement of the terminal device, obtain one or more of a load size, a computing power resource size, and a computing power resource utilization rate of the terminal device, and send to the management center; or
when the management center initiates a network-access capability measurement of the terminal device, obtain one or more of a wireless access capability of the terminal device and a terminal device type, and send to the management center.

Optionally, when receiving the adjusted computing power service routing strategy or the feedback information sent by the management center, the processor 803 is configured to:
receive the adjusted computing power service routing strategy or the feedback information sent by a RAN entity, where the adjusted computing power service routing strategy or the feedback information is sent by the management center to the RAN entity.

Optionally, when accessing the corresponding initial computing power service according to the initial computing power service routing strategy, the processor 803 is configured to:
initiate an application used for accessing the initial computing power service, and access the initial computing power service through the application.

Optionally, before the processor 803 receives the initial computing power service routing strategy determined by the management center according to the business requirement of the terminal device, the processor is further configured to:
send the business requirement to the management center; or
send the business requirement to a RAN entity to enable the RAN entity to send the business requirement to the management center.

The terminal device provided by the embodiment of the present disclosure can be specifically configured to execute the above method embodiments on the terminal device side. The specific functions are not described here again.

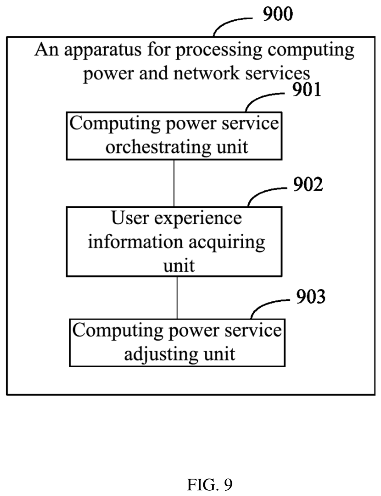

FIG. 9 is a structural diagram of an apparatus for processing computing power and network services provided by an embodiment of the present disclosure. The apparatus for processing computing power and network services provided by the embodiment can execute a processing flow provided by the method embodiments on the management center side. As shown in FIG. 9, an apparatus 900 for processing computing power and network services includes: a computing power service orchestrating unit 901, a user experience information acquiring unit 902, and a computing power service adjusting unit 903.
the computing power service orchestrating unit 901, configured to determine an initial computing power service routing strategy according to a business requirement of a terminal device, and send the initial computing power service routing strategy to the terminal device;
the user experience information acquiring unit 902, configured to: after the terminal device accesses a corresponding initial computing power service according to the initial computing power service routing strategy, receive user experience information for the initial computing power service sent by the terminal device;
the computing power service adjusting unit 903, configured to initiate a corresponding measurement according to the user experience information, determine an adjusted computing power service routing strategy according to a measurement result and send the adjusted computing power service routing strategy to the terminal device, or send feedback information to the terminal device.

Optionally, when receiving the user experience information for the initial computing power service sent by the terminal device after the terminal device accesses the corresponding initial computing power service according to the initial computing power service routing strategy, the user experience information acquiring unit 902 is configured to:
send a user experience event subscription message to the terminal device after the terminal device accesses the corresponding initial computing power service according to the initial computing power service routing strategy, where the user experience event subscription message includes a user experience event type for the initial computing power service;
receive the user experience information sent by the terminal device after the user experience event type is triggered, where the user experience information includes user experience data related to the user experience event type.

Optionally, the user experience event type includes one or more of the following:
startup time of an application used for accessing the initial computing power service exceeding a first preset duration; or
a number of restarts of the application used for accessing the initial computing power service exceeding a first preset number of times; or
during a process of service execution through the initial computing power service, a number of lags exceeding a second preset number of times; or
during a process of service execution through the initial computing power service, a single-lag time exceeding a second preset duration; or
during a process of service execution through the initial computing power service, a number of failed executions exceeding a third preset number of times; or
a connection-establishment delay for accessing the initial computing power service exceeding a third preset duration; or
a connection-establishment success rate for accessing the initial computing power service being lower than a preset success rate; or
a connection-interruption frequency for accessing the initial computing power service exceeding a preset frequency.

Optionally, the user experience data includes one or more of the following:
the startup time of the application used for accessing the initial computing power service; or
the number of restarts of the application used for accessing the initial computing power service; or
the number of lags and a monitoring period during the process of service execution through the initial computing power service; or
the single-lag time during the process of service execution through the initial computing power service; or
the number of failed executions and a monitoring period during the process of service execution through the initial computing power service; or
the connection-establishment delay for accessing the initial computing power service; or
the connection-establishment success rate for accessing the initial computing power service; or
the connection-interruption frequency for accessing the initial computing power service.

Optionally, after the terminal device accesses the corresponding initial computing power service according to the initial computing power service routing strategy, the computing power service orchestrating unit 901 is further configured to:
establish a computing power service mapping relationship, where the computing power service mapping relationship is a mapping relationship among one or more of an identifier of the terminal device, an identifier of an application used for accessing the initial computing power service, an identifier of a computing power node hosting the initial computing power service, and an identifier of the initial computing power service;
when sending the user experience event subscription message to the terminal device, the user experience information acquiring unit 902 is configured to:
   send the user experience event subscription message to the terminal device according to the computing power service mapping relationship.

Optionally, the user experience event subscription message further includes one or more of the following:
an identifier of the user experience event subscription message, an identifier of the terminal device, an identifier of an application used for accessing the initial computing power service, and a deadline for user experience event subscription.

Optionally, when sending the user experience event subscription message to the terminal device, the user experience information acquiring unit 902 is configured to:
send the user experience event subscription message to a radio access network RAN entity, to enable the RAN entity to send the user experience event subscription message to the terminal device;
when receiving the user experience information sent by the terminal device after the user experience event type is triggered, the user experience information acquiring unit 902 is configured to:
   receive the user experience information sent by the RAN entity, where the user experience information is sent by the terminal device to the RAN entity.

Optionally, when receiving the user experience information for the initial computing power service sent by the terminal device after the terminal device accesses the corresponding initial computing power service according to the initial computing power service routing strategy, the user experience information acquiring unit 902 is configured to:
receive the user experience information for the initial computing power service actively sent by the terminal device after the terminal device accesses the corresponding initial computing power service according to the initial computing power service routing strategy, where the user experience information is subjective perception information of the user for the initial computing power service; or
after the terminal device accesses the corresponding initial computing power service according to the initial computing power service routing strategy, send a user experience information collection request for the initial computing power service to the terminal device, and the terminal device responds to the user experience information collection request by sending the user experience information for the initial computing power service, where the user experience information is subjective perception information of the user for the initial computing power service.

Optionally, when receiving the user experience information for the initial computing power service actively sent by the terminal device, the user experience information acquiring unit 902 is configured to:
receive the user experience information sent by a RAN entity, where the user experience information is actively sent by the terminal device to the RAN entity; or
when sending the user experience information collection request for the initial computing power service to the terminal device, and receiving the user experience information for the initial computing power service that the terminal device sends in response to the user experience information collection request, the user experience information acquiring unit 902 is configured to:
   send the user experience information collection request to the RAN entity to enable the RAN entity to send the user experience information collection request to the terminal device, and receive the user experience information sent by the RAN entity, where the user experience information is information that the terminal device sends to the RAN entity in response to the user experience information collection request.

Optionally, when initiating the corresponding measurement according to the user experience information, the computing power service adjusting unit 903 is configured to:
perform cause analysis according to the user experience information, determine a measurement task according to a result of the analysis, and perform the measurement task, where the measurement task includes at least one of: a capability measurement of the terminal device, a computing capability measurement of a computing power node, and a quality measurement of a network service.

Optionally, when performing the cause analysis according to the user experience information, determining the measurement task according to the result of the analysis, and performing the measurement task, the computing power service adjusting unit 903 is configured to:
determine a predicted cause that triggers the user experience event type according to the user experience information, determine a measurement task corresponding to the predicted cause as a highest priority measurement task, and execute the highest priority measurement task;
after executing the highest priority measurement task, if the predicted cause is determined to be an actual cause that triggers the user experience event type, then end the measurement task; or
if the predicted cause is determined not to be the actual cause that triggers the user experience event type, then execute a further measurement task.

Optionally, when determining the predicted cause that triggers the user experience event type according to the user experience information, the computing power service adjusting unit 903 is configured to:
if the user experience information is relevant information pertaining to an application used for accessing the initial computing power service, then determine that the predicted cause that triggers the user experience event type is an insufficient capability of the terminal device; or
if the user experience information is relevant information pertaining to a lag or an execution failure during a process of service execution through the initial computing power service, then determine that the predicted cause that triggers the user experience event type is an insufficient computing capability of the initial computing power service and/or an insufficient quality of the network service; or
if the user experience information is a connection problem in accessing the initial computing power service, then determine that the predicted cause that triggers the user experience event type is an insufficient network-access capability of the terminal device or a terminal device type mismatch.

Optionally, when determining the adjusted computing power service routing strategy according to the measurement result and sending the adjusted computing power service routing strategy to the terminal device, or when sending feedback information to the terminal device, the computing power service adjusting unit 903 is configured to:
if the actual cause that triggers the user experience event type is determined to be a network cause according to the measurement result, then determine a new computing power service routing strategy to reach the initial computing power service, and send the new computing power service routing strategy to the terminal device; or
if the actual cause that triggers the user experience event type is determined to be an initial computing power service cause according to the measurement result, then determine a new computing power service, determine a new computing power service routing strategy to reach the new computing power service, and send the new computing power service routing strategy to the terminal device; or
if the actual cause that triggers the user experience event type is determined to be the terminal device according to the measurement result, then send the feedback information to the terminal device, where the feedback information includes the actual cause and/or a solution; or
if the actual cause that triggers the user experience event type is determined to be the terminal device according to the measurement result, then determine a new computing power service routing strategy to reach a new computing power service according to a capability of the terminal device, computing power resource status, and network resource status, and send the new computing power service routing strategy to the terminal device; or
if the actual cause that triggers the user experience event type is determined to be the terminal device according to the measurement result, and the terminal device is determined to be incapable of capability enhancement, then determine a new computing power service with a lower computing capability than the initial computing power service, determine a new computing power service routing strategy to reach the new computing power service, and send the new computing power service routing strategy to the terminal device.

Optionally, when determining the adjusted computing power service routing strategy according to the measurement result and sending the adjusted computing power service routing strategy to the terminal device, or when sending feedback information to the terminal device, the computing power service adjusting unit 903 is configured to:
determine the adjusted computing power service routing strategy according to the measurement result, and send the adjusted computing power service routing strategy to a RAN entity, to enable the RAN entity to send the adjusted computing power service routing strategy to the terminal device; or
send the feedback information to a RAN entity, to enable the RAN entity to send the feedback information to the terminal device.

Optionally, when determining the initial computing power service routing strategy according to the business requirement of the terminal device, the computing power service orchestrating unit 901 is configured to:
receive the business requirement sent by the terminal device, and determine an initial service routing strategy according to the business requirement; or
receive the business requirement sent by a RAN entity, and determine an initial service routing strategy according to the business requirement, where the business requirement is sent by the terminal device to the RAN entity.

Optionally, when sending the initial computing power service routing strategy to the terminal device, the computing power service orchestrating unit 901 is configured to:
send the initial computing power service routing strategy to a RAN entity, to enable the RAN entity to send the initial computing power service routing strategy to the terminal device.

Optionally, the computing power service orchestrating unit 901 is further configured to:
send the initial computing power service routing strategy to a core network entity, to enable establishment of a user plane path according to the initial computing power service routing strategy for the terminal device to access the initial computing power service corresponding to the initial computing power service routing strategy.

Optionally, when sending the initial computing power service routing strategy to the terminal device, the computing power service orchestrating unit 901 is configured to:
send an identifier of a computing power node hosting the initial computing power service and an identifier of the initial computing power service to the terminal device.

The apparatus for processing computing power and network services provided by the embodiment of the present disclosure can be specifically used to execute the above method embodiments on the management center side, and the specific functions are not described here again.

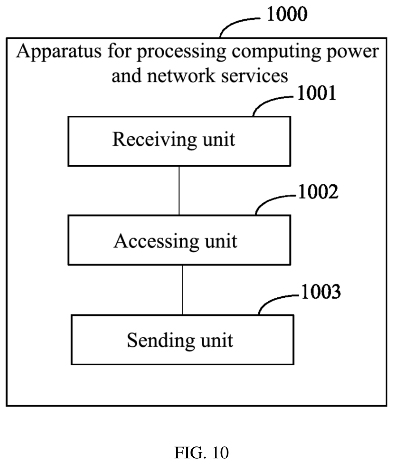

FIG. 10 is a structural diagram of an apparatus for processing computing power and network services provided by an embodiment of the present disclosure. The apparatus for processing computing power and network services provided by the embodiment can execute a processing flow provided by the method embodiments on the terminal device side. As shown in FIG. 10, the apparatus 1000 for processing computing power and network services includes: a receiving unit 1001, an accessing unit 1002, and a sending unit 1003.
the receiving unit 1001, configured to receive an initial computing power service routing strategy determined by a management center according to a business requirement of the terminal device;
the accessing unit 1002, configured to access a corresponding initial computing power service according to the initial computing power service routing strategy;
the sending unit 1003, configured to send user experience information for the initial computing power service to the management center;
the receiving unit 1001 is further configured to receive an adjusted computing power service routing strategy or feedback information sent by the management center, where the adjusted computing power service routing strategy is a computing power service routing strategy adjusted by the management center after performing the corresponding measurement according to the user experience information.

Optionally, when sending the user experience information for the initial computing power service to the management center, the sending unit 1003 is configured to:
receive a user experience event subscription message sent by the management center through the receiving unit 1001, where the user experience event subscription message includes a user experience event type for the initial computing power service;
determine whether the user experience event type is triggered;
upon determining that the user experience event type is triggered, send the user experience information for the initial computing power service to the management center.

Optionally, when receiving the user experience event subscription message sent by the management center, the receiving unit 1001 is configured to:
receive the user experience event subscription message sent by a RAN entity, where the user experience event subscription message is sent by the management center to the RAN entity;
when sending the user experience information for the initial computing power service to the management center, the sending unit 1003 is configured to:
   send the user experience information for the initial computing power service to the RAN entity, to enable the RAN entity to send the user experience information for the initial computing power service to the management center.

Optionally, when sending the user experience information for the initial computing power service to the management center, the sending unit 1003 is configured to:
actively send the user experience information for the initial computing power service to the management center, where the user experience information is subjective perception information of the user for the initial computing power service; or
receive a user experience information collection request for the initial computing power service sent by the management center through the receiving unit 1001, and send the user experience information for the initial computing power service to the management center in response to the user experience information collection request, where the user experience information is subjective perception information of the user for the initial computing power service.

Optionally, when actively sending the user experience information for the initial computing power service to the management center, the sending unit 1003 is configured to:
actively send the user experience information for the initial computing power service to a RAN entity, to enable the RAN entity to send the user experience information for the initial computing power service to the management center; or
when receiving the user experience information collection request for the initial computing power service sent by the management center through the receiving unit 1001, and sending the user experience information for the initial computing power service to the management center in response to the user experience information collection request, the sending unit 1003 is configured to:
   receive the user experience information collection request for the initial computing power service sent by a RAN entity through the receiving unit 1001, where the user experience information collection request is actively sent by the terminal device to the RAN entity; in response to the user experience information collection request, send the user experience information for the initial computing power service to the RAN entity, to enable the RAN entity to send the user experience information for the initial computing power service to the management center.

Optionally, the sending unit 1003 is further configured to:
when the management center initiates a computing capacity measurement of the terminal device, obtain one or more of a load size, a computing power resource size, and a computing power resource utilization rate of the terminal device, and send to the management center; or
when the management center initiates a network-access capability measurement of the terminal device, obtain one or more of a wireless access capability of the terminal device and a terminal device type, and send to the management center.

Optionally, when receiving the adjusted computing power service routing strategy or the feedback information sent by the management center, the receiving unit 1001 is configured to:
receive the adjusted computing power service routing strategy or the feedback information sent by a RAN entity, where the adjusted computing power service routing strategy or the feedback information is sent by the management center to the RAN entity.

Optionally, when accessing the corresponding initial computing power service according to the initial computing power service routing strategy, the accessing unit 1002 is configured to:
initiate an application used for accessing the initial computing power service, and access the initial computing power service through the application.

Optionally, before receiving the initial computing power service routing strategy determined by the management center according to the business requirement of the terminal device, the sending unit 1003 is further configured to:
send the business requirement to the management center; or
send the business requirement to a RAN entity to enable the RAN entity to send the business requirement to the management center.

The apparatus for processing computing power and network services provided by the embodiment of the present disclosure can be specifically used to execute the above method embodiments on the terminal device side. The specific functions are not described here again.

It should be noted that the division of units in the above embodiments of the present disclosure is illustrative, and it is merely a logical function division. The actual implementation can have other division methods. Moreover, in each embodiment of the present disclosure, each functional unit can be integrated in one processing unit, or, each unit exists physically independently, or, two or more units are integrated into one unit. An integrated unit can be implemented either in the form of hardware or in a form of software functional unit.

If the integrated unit is implemented in the form of the software functional unit and is sold or used as a separate product, it can be stored in a processor-readable storage medium. According to this understanding, the technical solution of the present disclosure essentially or a part which contributes to the prior art or all or part of the technical solution can be embodied in the form of a software product, the computer software product is stored in a storage medium, including several instructions for causing a computer device (such as a personal computer, server, or network device, etc.) or a processor (processor) to execute all or part of the steps of the method in each embodiment of the present disclosure. And the storage medium includes: a USB flash drive, a mobile hard disk, a read-only memory (Read-Only Memory, ROM), a random access memory (Random Access Memory, RAM), a magnetic disk or optical disc, and other medium that can store program code.

An embodiment of the present disclosure provides a computer-readable storage medium. The computer-readable storage medium stores a computer program, and the computer program is used to enable a processor to execute the method embodiments.

The computer-readable storage medium can be any available medium or data storage device that the processor can access, including but not limited to a magnetic memory (such as a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD), etc.).

Those skilled in the art should understand that the embodiments of the present disclosure can be provided as a method, a system, or a computer program product. Therefore, the present disclosure can take the form of a fully hardware embodiment, a fully software embodiment, or an embodiment combining software and hardware aspects. Moreover, the present disclosure can take the form of a computer program product implemented on one or more computer-usable storage medium (including but not limited to disk storages and optical storages) which contains computer-usable program codes.

The present disclosure is described with reference to the flowcharts and/or block diagrams of the method, device (system), and computer program product according to the embodiments of the present disclosure. It should be understood that each flow and/or block in the flowcharts and/or block diagrams, as well as the combination of flows and/or blocks in the flowcharts and/or block diagrams, can be implemented by computer executable instructions. These computer executable instructions can be provided to a general-purpose computer, a dedicated computer, an embedded processor, or other programmable data processing device's processor to produce an equipment, to cause the instructions executed through the computer or other programmable data processing device's processor to produce an apparatus that is used to implement the functions specified in one or more flows in the flowcharts and/or one or more blocks in the block diagrams.

These processor executable instructions can also be stored in a processor-readable memory capable of guiding a computer or other programmable data processing device to operate in a specific manner. This enables the instructions stored in the processor-readable memory to produce a manufactured product including an instruction apparatus, the instruction apparatus implements the functions specified in one or more flows in the flowcharts and/or one or more blocks in the block diagrams.

These processor executable instructions can also be loaded onto a computer or other programmable data processing device, enabling a series of operation steps to be executed on the computer or other programmable device to generate computer-implemented processing, thereby the instructions executed on the computer or other programmable device provide steps for implementing the functions specified in one or more flows in the flowcharts and/or one or more blocks in the block diagrams.

Obviously, those skilled in the art can make various modifications and variations to the present disclosure without departing from the spirit and scope of the present disclosure. Thus, if these modifications and variations fall within the scope of the claims and their equivalents of the present disclosure, the present disclosure also intends to include these modifications and variations.

## Claims

1. A method for processing computing power and network services, **characterized by** being applied to a management center, wherein the method comprises:
determining an initial computing power service routing strategy according to a business requirement of a terminal device, and sending the initial computing power service routing strategy to the terminal device;
after the terminal device accesses a corresponding initial computing power service according to the initial computing power service routing strategy, receiving user experience information for the initial computing power service sent by the terminal device;
initiating a corresponding measurement according to the user experience information, determining an adjusted computing power service routing strategy according to a measurement result and sending the adjusted computing power service routing strategy to the terminal device, or sending feedback information to the terminal device.

2. The method according to claim 1, wherein the receiving the user experience information for the initial computing power service sent by the terminal device after the terminal device accesses the corresponding initial computing power service according to the initial computing power service routing strategy comprises:
sending a user experience event subscription message to the terminal device after the terminal device accesses the corresponding initial computing power service according to the initial computing power service routing strategy, wherein the user experience event subscription message comprises a user experience event type for the initial computing power service;
receiving the user experience information sent by the terminal device after the user experience event type is triggered, wherein the user experience information comprises user experience data related to the user experience event type.

3. The method according to claim 2, wherein the user experience event type comprises one or more of the following:
startup time of an application used for accessing the initial computing power service exceeding a first preset duration; or
a number of restarts of the application used for accessing the initial computing power service exceeding a first preset number of times; or
during a process of service execution through the initial computing power service, a number of lags exceeding a second preset number of times; or
during a process of service execution through the initial computing power service, a single-lag time exceeding a second preset duration; or
during a process of service execution through the initial computing power service, a number of failed executions exceeding a third preset number of times; or
a connection-establishment delay for accessing the initial computing power service exceeding a third preset duration; or
a connection-establishment success rate for accessing the initial computing power service being lower than a preset success rate; or
a connection-interruption frequency for accessing the initial computing power service exceeding a preset frequency.

4. The method according to claim 3, wherein the user experience data comprises one or more of the following:
the startup time of the application used for accessing the initial computing power service; or
the number of restarts of the application used for accessing the initial computing power service; or
the number of lags and a monitoring period during the process of service execution through the initial computing power service; or
the single-lag time during the process of service execution through the initial computing power service; or
the number of failed executions and a monitoring period during the process of service execution through the initial computing power service; or
the connection-establishment delay for accessing the initial computing power service; or
the connection-establishment success rate for accessing the initial computing power service; or
the connection-interruption frequency for accessing the initial computing power service.

5. The method according to claim 2, after the terminal device accesses the corresponding initial computing power service according to the initial computing power service routing strategy, further comprising:
establishing a computing power service mapping relationship, wherein the computing power service mapping relationship is a mapping relationship among one or more of an identifier of the terminal device, an identifier of an application used for accessing the initial computing power service, an identifier of a computing power node hosting the initial computing power service, and an identifier of the initial computing power service;
the sending the user experience event subscription message to the terminal device comprises:
sending the user experience event subscription message to the terminal device according to the computing power service mapping relationship.

6. The method according to claim 2, wherein the user experience event subscription message further comprises one or more of the following:
an identifier of the user experience event subscription message, an identifier of the terminal device, an identifier of an application used for accessing the initial computing power service, and a deadline for user experience event subscription.

7. The method according to any one of claims 2 to 6, wherein the sending the user experience event subscription message to the terminal device comprises:
sending the user experience event subscription message to a radio access network RAN entity, to enable the RAN entity to send the user experience event subscription message to the terminal device;
the receiving the user experience information sent by the terminal device after the user experience event type is triggered comprises:
receiving the user experience information sent by the RAN entity, wherein the user experience information is sent by the terminal device to the RAN entity.

8. The method according to claim 1, wherein the receiving the user experience information for the initial computing power service sent by the terminal device after the terminal device accesses the corresponding initial computing power service according to the initial computing power service routing strategy, comprises:
receiving the user experience information for the initial computing power service actively sent by the terminal device after the terminal device accesses the corresponding initial computing power service according to the initial computing power service routing strategy, wherein the user experience information is subjective perception information of the user for the initial computing power service; or
after the terminal device accesses the corresponding initial computing power service according to the initial computing power service routing strategy, sending a user experience information collection request for the initial computing power service to the terminal device, and the terminal device responds to the user experience information collection request by sending the user experience information for the initial computing power service, wherein the user experience information is subjective perception information of the user for the initial computing power service.

9. The method according to claim 8, wherein the receiving the user experience information for the initial computing power service actively sent by the terminal device comprises:
receiving the user experience information sent by a RAN entity, wherein the user experience information is actively sent by the terminal device to the RAN entity; or
the sending the user experience information collection request for the initial computing power service to the terminal device, and receiving the user experience information for the initial computing power service that the terminal device sends in response to the user experience information collection request, comprises:
sending the user experience information collection request to the RAN entity to enable the RAN entity to send the user experience information collection request to the terminal device, and receiving the user experience information sent by the RAN entity, wherein the user experience information is information that the terminal device sends to the RAN entity in response to the user experience information collection request.

10. The method according to claim 1, wherein the initiating the corresponding measurement according to the user experience information comprises:
performing cause analysis according to the user experience information, determining a measurement task according to a result of the analysis, and performing the measurement task, wherein the measurement task comprises at least one of: a capability measurement of the terminal device, a computing capability measurement of a computing power node, and a quality measurement of a network service.

11. The method according to claim 10, wherein the performing the cause analysis according to the user experience information, determining the measurement task according to the result of the analysis, and performing the measurement task comprises:
determining a predicted cause that triggers the user experience event type according to the user experience information, determining a measurement task corresponding to the predicted cause as a highest priority measurement task, and executing the highest priority measurement task;
after executing the highest priority measurement task, if the predicted cause is determined to be an actual cause that triggers the user experience event type, then terminating the measurement task; or
if the predicted cause is determined not to be the actual cause that triggers the user experience event type, then executing a further measurement task.

12. The method according to claim 11, wherein the determining the predicted cause that triggers the user experience event type according to the user experience information comprises:
if the user experience information is relevant information pertaining to an application used for accessing the initial computing power service, then determining that the predicted cause that triggers the user experience event type is an insufficient capability of the terminal device; or
if the user experience information is relevant information pertaining to a lag or an execution failure during a process of service execution through the initial computing power service, then determining that the predicted cause that triggers the user experience event type is an insufficient computing capability of the initial computing power service and/or an insufficient quality of the network service; or
if the user experience information is a connection problem in accessing the initial computing power service, then determining that the predicted cause that triggers the user experience event type is an insufficient network-access capability of the terminal device or a terminal device type mismatch.

13. The method according to claim 11, wherein the determining the adjusted computing power service routing strategy according to the measurement result and sending the adjusted computing power service routing strategy to the terminal device, or sending the feedback information to the terminal device, comprises:
if the actual cause that triggers the user experience event type is determined to be a network cause according to the measurement result, then determining a new computing power service routing strategy to reach the initial computing power service, and sending the new computing power service routing strategy to the terminal device; or
if the actual cause that triggers the user experience event type is determined to be an initial computing power service cause according to the measurement result, then determining a new computing power service, determining a new computing power service routing strategy to reach the new computing power service, and sending the new computing power service routing strategy to the terminal device; or
if the actual cause that triggers the user experience event type is determined to be the terminal device according to the measurement result, then sending the feedback information to the terminal device, wherein the feedback information comprises the actual cause and/or a solution; or
if the actual cause that triggers the user experience event type is determined to be the terminal device according to the measurement result, then determining a new computing power service routing strategy to reach a new computing power service according to a capability of the terminal device, computing power resource status, and network resource status, and sending the new computing power service routing strategy to the terminal device; or
if the actual cause that triggers the user experience event type is determined to be the terminal device according to the measurement result, and the terminal device is determined to be incapable of capability enhancement, then determining a new computing power service with a lower computing capability than the initial computing power service, determining a new computing power service routing strategy to reach the new computing power service, and sending the new computing power service routing strategy to the terminal device.

14. The method according to claim 1, wherein the determining the adjusted computing power service routing strategy according to the measurement result and sending the adjusted computing power service routing strategy to the terminal device, or sending the feedback information to the terminal device, comprises:
determining the adjusted computing power service routing strategy according to the measurement result, and sending the adjusted computing power service routing strategy to a RAN entity, to enable the RAN entity to send the adjusted computing power service routing strategy to the terminal device; or
sending the feedback information to a RAN entity, to enable the RAN entity to send the feedback information to the terminal device.

15. The method according to claim 1, wherein the determining the initial computing power service routing strategy according to the business requirement of the terminal device comprises:
receiving the business requirement sent by the terminal device, and determining an initial service routing strategy according to the business requirement; or
receiving the business requirement sent by a RAN entity, and determining an initial service routing strategy according to the business requirement, wherein the business requirement is sent by the terminal device to the RAN entity.

16. The method according to claim 1, wherein the sending the initial computing power service routing strategy to the terminal device comprises:
sending the initial computing power service routing strategy to a RAN entity, to enable the RAN entity to send the initial computing power service routing strategy to the terminal device.

17. The method according to claim 16, further comprising:
sending the initial computing power service routing strategy to a core network entity, to enable establishment of a user plane path according to the initial computing power service routing strategy for the terminal device to access the initial computing power service corresponding to the initial computing power service routing strategy.

18. The method according to claim 1, wherein the sending the initial computing power service routing strategy to the terminal device further comprises:
sending an identifier of a computing power node hosting the initial computing power service and an identifier of the initial computing power service to the terminal device.

19. A method for processing computing power and network services, **characterized by** being applied to a terminal device, wherein the method comprises:
receiving an initial computing power service routing strategy determined by a management center according to a business requirement of the terminal device;
accessing a corresponding initial computing power service according to the initial computing power service routing strategy;
sending user experience information for the initial computing power service to the management center;
receiving an adjusted computing power service routing strategy or feedback information sent by the management center, wherein the adjusted computing power service routing strategy is a computing power service routing strategy adjusted by the management center after performing a corresponding measurement according to the user experience information.

20. The method according to claim 19, wherein the sending the user experience information for the initial computing power service to the management center comprises:
receiving a user experience event subscription message sent by the management center, wherein the user experience event subscription message comprises a user experience event type for the initial computing power service;
determining whether the user experience event type is triggered;
upon determining that the user experience event type is triggered, sending the user experience information for the initial computing power service to the management center.

21. The method according to claim 20, wherein the receiving the user experience event subscription message sent by the management center comprises:
receiving the user experience event subscription message sent by a RAN entity, wherein the user experience event subscription message is sent by the management center to the RAN entity;
the sending the user experience information for the initial computing power service to the management center comprises:
sending the user experience information for the initial computing power service to the RAN entity, to enable the RAN entity to send the user experience information for the initial computing power service to the management center.

22. The method according to claim 19, wherein the sending the user experience information for the initial computing power service to the management center comprises:
actively sending the user experience information for the initial computing power service to the management center, wherein the user experience information is subjective perception information of the user for the initial computing power service; or
receiving a user experience information collection request for the initial computing power service sent by the management center, and sending the user experience information for the initial computing power service to the management center in response to the user experience information collection request, wherein the user experience information is subjective perception information of the user for the initial computing power service.

23. The method according to claim 22, wherein the actively sending the user experience information for the initial computing power service to the management center comprises:
actively sending the user experience information for the initial computing power service to a RAN entity, to enable the RAN entity to send the user experience information for the initial computing power service to the management center; or
the receiving the user experience information collection request for the initial computing power service sent by the management center, and sending the user experience information for the initial computing power service to the management center in response to the user experience information collection request, comprises:
receiving the user experience information collection request for the initial computing power service sent by a RAN entity, wherein the user experience information collection request is actively sent by the terminal device to the RAN entity; in response to the user experience information collection request, sending the user experience information for the initial computing power service to the RAN entity, to enable the RAN entity to send the user experience information for the initial computing power service to the management center.

24. The method according to any one of claims 19 to 23, wherein the method further comprises:
when the management center initiates a computing capacity measurement of the terminal device, obtaining one or more of a load size, a computing power resource size, and a computing power resource utilization rate of the terminal device, and sending to the management center; or
when the management center initiates a network-access capability measurement of the terminal device, obtaining one or more of a wireless access capability of the terminal device and a terminal device type, and sending to the management center.

25. The method according to any one of claims 19 to 23, wherein the receiving the adjusted computing power service routing strategy or the feedback information sent by the management center comprises:
receiving the adjusted computing power service routing strategy or the feedback information sent by a RAN entity, wherein the adjusted computing power service routing strategy or the feedback information is sent by the management center to the RAN entity.

26. The method according to any one of claims 19 to 23, wherein the accessing the corresponding initial computing power service according to the initial computing power service routing strategy comprises:
initiating an application used for accessing the initial computing power service, and accessing the initial computing power service through the application.

27. The method according to any one of claims 19 to 23, before receiving the initial computing power service routing strategy determined by the management center according to the business requirement of the terminal device, further comprising:
sending the business requirement to the management center; or
sending the business requirement to a RAN entity to enable the RAN entity to send the business requirement to the management center.

28. A management center entity, **characterized by** comprising a memory, a transceiver, and a processor;
the memory is configured to store a computer program; the transceiver is configured to receive and transmit data under control of the processor; the processor is configured to read the computer program in the memory and execute following operations:
determining an initial computing power service routing strategy according to a business requirement of a terminal device, and sending the initial computing power service routing strategy to the terminal device;
after the terminal device accesses a corresponding initial computing power service according to the initial computing power service routing strategy, receiving user experience information for the initial computing power service sent by the terminal device;
initiating a corresponding measurement according to the user experience information, determining an adjusted computing power service routing strategy according to a measurement result and sending the adjusted computing power service routing strategy to the terminal device, or sending feedback information to the terminal device.

29. The management center entity according to claim 28, wherein when receiving the user experience information for the initial computing power service sent by the terminal device after the terminal device accesses the corresponding initial computing power service according to the initial computing power service routing strategy, the processor is configured to:
send a user experience event subscription message to the terminal device after the terminal device accesses the corresponding initial computing power service according to the initial computing power service routing strategy, wherein the user experience event subscription message comprises a user experience event type for the initial computing power service;
receive the user experience information sent by the terminal device after the user experience event type is triggered, wherein the user experience information comprises user experience data related to the user experience event type.

30. The management center entity according to claim 29, wherein the user experience event type comprises one or more of the following:
startup time of an application used for accessing the initial computing power service exceeding a first preset duration; or
a number of restarts of the application used for accessing the initial computing power service exceeding a first preset number of times; or
during a process of service execution through the initial computing power service, a number of lags exceeding a second preset number of times; or
during a process of service execution through the initial computing power service, a single-lag time exceeding a second preset duration; or
during a process of service execution through the initial computing power service, a number of failed executions exceeding a third preset number of times; or
a connection-establishment delay for accessing the initial computing power service exceeding a third preset duration; or
a connection-establishment success rate for accessing the initial computing power service being lower than a preset success rate; or
a connection-interruption frequency for accessing the initial computing power service exceeding a preset frequency.

31. The management center entity according to claim 30, wherein the user experience data comprises one or more of the following:
the startup time of the application used for accessing the initial computing power service; or
the number of restarts of the application used for accessing the initial computing power service; or
the number of lags and a monitoring period during the process of service execution through the initial computing power service; or
the single-lag time during the process of service execution through the initial computing power service; or
the number of failed executions and a monitoring period during the process of service execution through the initial computing power service; or
the connection-establishment delay for accessing the initial computing power service; or
the connection-establishment success rate for accessing the initial computing power service; or
the connection-interruption frequency for accessing the initial computing power service.

32. The management center entity according to claim 29, wherein after the terminal device accesses the corresponding initial computing power service according to the initial computing power service routing strategy, the processor is further configured to:
establish a computing power service mapping relationship, wherein the computing power service mapping relationship is a mapping relationship among one or more of an identifier of the terminal device, an identifier of an application used for accessing the initial computing power service, an identifier of a computing power node hosting the initial computing power service, and an identifier of the initial computing power service;
when sending the user experience event subscription message to the terminal device, the processor is configured to:
send the user experience event subscription message to the terminal device according to the computing power service mapping relationship.

33. The management center entity according to claim 29, wherein the user experience event subscription message further comprises one or more of the following:
an identifier of the user experience event subscription message, an identifier of the terminal device, an identifier of an application used for accessing the initial computing power service, and a deadline for user experience event subscription.

34. The management center entity according to any one of claims 29 to 33, wherein when sending the user experience event subscription message to the terminal device, the processor is configured to:
send the user experience event subscription message to a radio access network RAN entity, to enable the RAN entity to send the user experience event subscription message to the terminal device;
when receiving the user experience information sent by the terminal device after the user experience event type is triggered, the processor is configured to:
receive the user experience information sent by the RAN entity, wherein the user experience information is sent by the terminal device to the RAN entity.

35. The management center entity according to claim 28, wherein when receiving the user experience information for the initial computing power service sent by the terminal device after the terminal device accesses the corresponding initial computing power service according to the initial computing power service routing strategy, the processor is configured to:
receive the user experience information for the initial computing power service actively sent by the terminal device after the terminal device accesses the corresponding initial computing power service according to the initial computing power service routing strategy, wherein the user experience information is subjective perception information of the user for the initial computing power service; or
after the terminal device accesses the corresponding initial computing power service according to the initial computing power service routing strategy, send a user experience information collection request for the initial computing power service to the terminal device, and the terminal device responds to the user experience information collection request by sending the user experience information for the initial computing power service, wherein the user experience information is subjective perception information of the user for the initial computing power service.

36. The management center entity according to claim 35, wherein when receiving the user experience information for the initial computing power service actively sent by the terminal device, the processor is configured to:
receive the user experience information sent by a RAN entity, wherein the user experience information is actively sent by the terminal device to the RAN entity; or
when sending the user experience information collection request for the initial computing power service to the terminal device, and receiving the user experience information for the initial computing power service that the terminal device sends in response to the user experience information collection request, the processor is configured to:
send the user experience information collection request to the RAN entity to enable the RAN entity to send the user experience information collection request to the terminal device, and receive the user experience information sent by the RAN entity, wherein the user experience information is information that the terminal device sends to the RAN entity in response to the user experience information collection request.

37. The management center entity according to claim 28, wherein when initiating the corresponding measurement according to the user experience information, the processor is configured to:
perform cause analysis according to the user experience information, determine a measurement task according to a result of the analysis, and perform the measurement task, wherein the measurement task comprises at least one of: a capability measurement of the terminal device, a computing capability measurement of a computing power node, and a quality measurement of a network service.

38. The management center entity according to claim 37, wherein when performing the cause analysis according to the user experience information, determining the measurement task according to the result of the analysis, and performing the measurement task, the processor is configured to:
determine a predicted cause that triggers the user experience event type according to the user experience information, determine a measurement task corresponding to the predicted cause as a highest priority measurement task, and execute the highest priority measurement task;
after executing the highest priority measurement task, if the predicted cause is determined to be an actual cause that triggers the user experience event type, then terminate the measurement task; or
if the predicted cause is determined not to be the actual cause that triggers the user experience event type, then execute a further measurement task.

39. The management center entity according to claim 38, wherein when determining the predicted cause that triggers the user experience event type according to the user experience information, the processor is configured to:
if the user experience information is relevant information pertaining to an application used for accessing the initial computing power service, then determine that the predicted cause that triggers the user experience event type is an insufficient capability of the terminal device; or
if the user experience information is relevant information pertaining to a lag or an execution failure during a process of service execution through the initial computing power service, then determine that the predicted cause that triggers the user experience event type is an insufficient computing capability of the initial computing power service and/or an insufficient quality of the network service; or
if the user experience information is a connection problem in accessing the initial computing power service, then determine that the predicted cause that triggers the user experience event type is an insufficient network-access capability of the terminal device or a terminal device type mismatch.

40. The management center entity according to claim 38, wherein when determining the adjusted computing power service routing strategy according to the measurement result and sending the adjusted computing power service routing strategy to the terminal device, or when sending feedback information to the terminal device, the processor is configured to:
if the actual cause that triggers the user experience event type is determined to be a network cause according to the measurement result, then determine a new computing power service routing strategy to reach the initial computing power service, and send the new computing power service routing strategy to the terminal device; or
if the actual cause that triggers the user experience event type is determined to be an initial computing power service cause according to the measurement result, then determine a new computing power service, determine a new computing power service routing strategy to reach the new computing power service, and send the new computing power service routing strategy to the terminal device; or
if the actual cause that triggers the user experience event type is determined to be the terminal device according to the measurement result, then send the feedback information to the terminal device, wherein the feedback information comprises the actual cause and/or a solution; or
if the actual cause that triggers the user experience event type is determined to be the terminal device according to the measurement result, then determine a new computing power service routing strategy to reach a new computing power service according to a capability of the terminal device, computing power resource status, and network resource status, and send the new computing power service routing strategy to the terminal device; or
if the actual cause that triggers the user experience event type is determined to be the terminal device according to the measurement result, and the terminal device is determined to be incapable of capability enhancement, then determine a new computing power service with a lower computing capability than the initial computing power service, determine a new computing power service routing strategy to reach the new computing power service, and send the new computing power service routing strategy to the terminal device.

41. The management center entity according to claim 28, wherein when determining the adjusted computing power service routing strategy according to the measurement result and sending the adjusted computing power service routing strategy to the terminal device, or when sending feedback information to the terminal device, the processor is configured to:
determine the adjusted computing power service routing strategy according to the measurement result, and send the adjusted computing power service routing strategy to a RAN entity, to enable the RAN entity to send the adjusted computing power service routing strategy to the terminal device; or
send the feedback information to a RAN entity, to enable the RAN entity to send the feedback information to the terminal device.

42. The management center entity according to claim 28, wherein when determining the initial computing power service routing strategy according to the business requirement of the terminal device, the processor is configured to:
receive the business requirement sent by the terminal device, and determine an initial service routing strategy according to the business requirement; or
receive the business requirement sent by a RAN entity, and determine an initial service routing strategy according to the business requirement, wherein the business requirement is sent by the terminal device to the RAN entity.

43. The management center entity according to claim 28, wherein when sending the initial computing power service routing strategy to the terminal device, the processor is configured to:
send the initial computing power service routing strategy to a RAN entity, to enable the RAN entity to send the initial computing power service routing strategy to the terminal device.

44. The management center entity according to claim 43, wherein the processor is further configured to:
send the initial computing power service routing strategy to a core network entity, to enable establishment of a user plane path according to the initial computing power service routing strategy for the terminal device to access the initial computing power service corresponding to the initial computing power service routing strategy.

45. The management center entity according to claim 28, wherein when sending the initial computing power service routing strategy to the terminal device, the processor is configured to:
send an identifier of a computing power node hosting the initial computing power service and an identifier of the initial computing power service to the terminal device.

46. A terminal device, **characterized by** comprising a memory, a transceiver, and a processor;
the memory is configured to store a computer program; the transceiver is configured to receive and transmit data under control of the processor; the processor is configured to read the computer program stored in the memory and execute the following operations:
receiving an initial computing power service routing strategy determined by a management center according to a business requirement of the terminal device;
accessing a corresponding initial computing power service according to the initial computing power service routing strategy;
sending user experience information for the initial computing power service to the management center;
receiving an adjusted computing power service routing strategy or feedback information sent by the management center, wherein the adjusted computing power service routing strategy is a computing power service routing strategy adjusted by the management center after performing a corresponding measurement according to the user experience information.

47. The terminal device according to claim 46, wherein when sending the user experience information for the initial computing power service to the management center, the processor is configured to:
receive a user experience event subscription message sent by the management center, wherein the user experience event subscription message comprises a user experience event type for the initial computing power service;
determine whether the user experience event type is triggered;
upon determining that the user experience event type is triggered, send the user experience information for the initial computing power service to the management center.

48. The terminal device according to claim 47, wherein when receiving the user experience event subscription message sent by the management center, the processor is configured to:
receive the user experience event subscription message sent by a RAN entity, wherein the user experience event subscription message is sent by the management center to the RAN entity;
when sending the user experience information for the initial computing power service to the management center, the processor is configured to:
send the user experience information for the initial computing power service to the RAN entity, to enable the RAN entity to send the user experience information for the initial computing power service to the management center.

49. The terminal device according to claim 46, wherein when sending the user experience information for the initial computing power service to the management center, the processor is configured to:
actively send the user experience information for the initial computing power service to the management center, wherein the user experience information is subjective perception information of the user for the initial computing power service; or
receive a user experience information collection request for the initial computing power service sent by the management center, and send the user experience information for the initial computing power service to the management center in response to the user experience information collection request, wherein the user experience information is subjective perception information of the user for the initial computing power service.

50. The terminal device according to claim 49, wherein when actively sending the user experience information for the initial computing power service to the management center, the processor is configured to:
actively send the user experience information for the initial computing power service to a RAN entity, to enable the RAN entity to send the user experience information for the initial computing power service to the management center; or
when receiving the user experience information collection request for the initial computing power service sent by the management center, and sending the user experience information for the initial computing power service to the management center in response to the user experience information collection request, the processor is configured to:
receive the user experience information collection request for the initial computing power service sent by a RAN entity, wherein the user experience information collection request is actively sent by the terminal device to the RAN entity; in response to the user experience information collection request, send the user experience information for the initial computing power service to the RAN entity, to enable the RAN entity to send the user experience information for the initial computing power service to the management center.

51. The terminal device according to any one of claims 46 to 50, wherein the processor is further configured to:
when the management center initiates a computing capacity measurement of the terminal device, obtain one or more of a load size, a computing power resource size, and a computing power resource utilization rate of the terminal device, and send to the management center; or
when the management center initiates a network-access capability measurement of the terminal device, obtain one or more of a wireless access capability of the terminal device and a terminal device type, and send to the management center.

52. The terminal device according to any one of claims 46 to 50, wherein when receiving the adjusted computing power service routing strategy or the feedback information sent by the management center, the processor is configured to:
receive the adjusted computing power service routing strategy or the feedback information sent by a RAN entity, wherein the adjusted computing power service routing strategy or the feedback information is sent by the management center to the RAN entity.

53. The terminal device according to any one of claims 46 to 50, wherein when accessing the corresponding initial computing power service according to the initial computing power service routing strategy, the processor is configured to:
initiate an application used for accessing the initial computing power service, and access the initial computing power service through the application.

54. The terminal device according to any one of claims 46 to 50, wherein before the processor receives the initial computing power service routing strategy determined by the management center according to the business requirement of the terminal device, the processor is further configured to:
send the business requirement to the management center; or
send the business requirement to a RAN entity to enable the RAN entity to send the business requirement to the management center.

55. An apparatus for processing computing power and network services, **characterized by** comprising:
a computing power service orchestrating unit, configured to determine an initial computing power service routing strategy according to a business requirement of a terminal device, and send the initial computing power service routing strategy to the terminal device;
a user experience information acquiring unit, configured to: after the terminal device accesses a corresponding initial computing power service according to the initial computing power service routing strategy, receive user experience information for the initial computing power service sent by the terminal device;
a computing power service adjusting unit, configured to initiate a corresponding measurement according to the user experience information, determine an adjusted computing power service routing strategy according to a measurement result and send the adjusted computing power service routing strategy to the terminal device, or send feedback information to the terminal device.

56. The apparatus according to claim 55, wherein when receiving the user experience information for the initial computing power service sent by the terminal device after the terminal device accesses the corresponding initial computing power service according to the initial computing power service routing strategy, the user experience information acquiring unit is configured to:
send a user experience event subscription message to the terminal device after the terminal device accesses the corresponding initial computing power service according to the initial computing power service routing strategy, wherein the user experience event subscription message comprises a user experience event type for the initial computing power service;
receive the user experience information sent by the terminal device after the user experience event type is triggered, wherein the user experience information comprises user experience data related to the user experience event type.

57. The apparatus according to claim 56, wherein the user experience event type comprises one or more of the following:
startup time of an application used for accessing the initial computing power service exceeding a first preset duration; or
a number of restarts of the application used for accessing the initial computing power service exceeding a first preset number of times; or
during a process of service execution through the initial computing power service, a number of lags exceeding a second preset number of times; or
during a process of service execution through the initial computing power service, a single-lag time exceeding a second preset duration; or
during a process of service execution through the initial computing power service, a number of failed executions exceeding a third preset number of times; or
a connection-establishment delay for accessing the initial computing power service exceeding a third preset duration; or
a connection-establishment success rate for accessing the initial computing power service being lower than a preset success rate; or
a connection-interruption frequency for accessing the initial computing power service exceeding a preset frequency.

58. The apparatus according to claim 57, wherein the user experience data comprises one or more of the following:
the startup time of the application used for accessing the initial computing power service; or
the number of restarts of the application used for accessing the initial computing power service; or
the number of lags and a monitoring period during the process of service execution through the initial computing power service; or
the single-lag time during the process of service execution through the initial computing power service; or
the number of failed executions and a monitoring period during the process of service execution through the initial computing power service; or
the connection-establishment delay for accessing the initial computing power service; or
the connection-establishment success rate for accessing the initial computing power service; or
the connection-interruption frequency for accessing the initial computing power service.

59. The apparatus according to claim 56, wherein after the terminal device accesses the corresponding initial computing power service according to the initial computing power service routing strategy, the computing power service orchestrating unit is further configured to:
establish a computing power service mapping relationship, wherein the computing power service mapping relationship is a mapping relationship among one or more of an identifier of the terminal device, an identifier of an application used for accessing the initial computing power service, an identifier of a computing power node hosting the initial computing power service, and an identifier of the initial computing power service;
when sending the user experience event subscription message to the terminal device, the user experience information acquiring unit is configured to:
send the user experience event subscription message to the terminal device according to the computing power service mapping relationship.

60. The apparatus according to claim 56, wherein the user experience event subscription message further comprises one or more of the following:
an identifier of the user experience event subscription message, an identifier of the terminal device, an identifier of an application used for accessing the initial computing power service, and a deadline for user experience event subscription.

61. The apparatus according to any one of claims 56 to 60, wherein when sending the user experience event subscription message to the terminal device, the user experience information acquiring unit is configured to:
send the user experience event subscription message to a radio access network RAN entity, to enable the RAN entity to send the user experience event subscription message to the terminal device;
when receiving the user experience information sent by the terminal device after the user experience event type is triggered, the user experience information acquiring unit is configured to:
receive the user experience information sent by the RAN entity, wherein the user experience information is sent by the terminal device to the RAN entity.

62. The apparatus according to claim 55, wherein when receiving the user experience information for the initial computing power service sent by the terminal device after the terminal device accesses the corresponding initial computing power service according to the initial computing power service routing strategy, the user experience information acquiring unit is configured to:
receive the user experience information for the initial computing power service actively sent by the terminal device after the terminal device accesses the corresponding initial computing power service according to the initial computing power service routing strategy, wherein the user experience information is subjective perception information of the user for the initial computing power service; or
after the terminal device accesses the corresponding initial computing power service according to the initial computing power service routing strategy, send a user experience information collection request for the initial computing power service to the terminal device, and the terminal device responds to the user experience information collection request by sending the user experience information for the initial computing power service, wherein the user experience information is subjective perception information of the user for the initial computing power service.

63. The apparatus according to claim 62, wherein when receiving the user experience information for the initial computing power service actively sent by the terminal device, the user experience information acquiring unit is configured to:
receive the user experience information sent by a RAN entity, wherein the user experience information is actively sent by the terminal device to the RAN entity; or
when sending the user experience information collection request for the initial computing power service to the terminal device, and receiving the user experience information for the initial computing power service that the terminal device sends in response to the user experience information collection request, the user experience information acquiring unit is configured to:
send the user experience information collection request to the RAN entity to enable the RAN entity to send the user experience information collection request to the terminal device, and receive the user experience information sent by the RAN entity, wherein the user experience information is information that the terminal device sends to the RAN entity in response to the user experience information collection request.

64. The apparatus according to claim 55, wherein when initiating the corresponding measurement according to the user experience information, the computing power service adjusting unit is configured to:
perform cause analysis according to the user experience information, determine a measurement task according to a result of the analysis, and perform the measurement task, wherein the measurement task comprises at least one of: a capability measurement of the terminal device, a computing capability measurement of a computing power node, and a quality measurement of a network service.

65. The apparatus according to claim 64, wherein when performing the cause analysis according to the user experience information, determining the measurement task according to the result of the analysis, and performing the measurement task, the computing power service adjusting unit is configured to:
determine a predicted cause that triggers the user experience event type according to the user experience information, determine a measurement task corresponding to the predicted cause as a highest priority measurement task, and execute the highest priority measurement task;
after executing the highest priority measurement task, if the predicted cause is determined to be an actual cause that triggers the user experience event type, then terminate the measurement task; or
if the predicted cause is determined not to be the actual cause that triggers the user experience event type, then execute a further measurement task.

66. The apparatus according to claim 65, wherein when determining the predicted cause that triggers the user experience event type according to the user experience information, the computing power service adjusting unit is configured to:
if the user experience information is relevant information pertaining to an application used for accessing the initial computing power service, then determine that the predicted cause that triggers the user experience event type is an insufficient capability of the terminal device; or
if the user experience information is relevant information pertaining to a lag or an execution failure during a process of service execution through the initial computing power service, then determine that the predicted cause that triggers the user experience event type is an insufficient computing capability of the initial computing power service and/or an insufficient quality of the network service; or
if the user experience information is a connection problem in accessing the initial computing power service, then determine that the predicted cause that triggers the user experience event type is an insufficient network-access capability of the terminal device or a terminal device type mismatch.

67. The apparatus according to claim 65, wherein when determining the adjusted computing power service routing strategy according to the measurement result and sending the adjusted computing power service routing strategy to the terminal device, or when sending feedback information to the terminal device, the computing power service adjusting unit is configured to:
if the actual cause that triggers the user experience event type is determined to be a network cause according to the measurement result, then determine a new computing power service routing strategy to reach the initial computing power service, and send the new computing power service routing strategy to the terminal device; or
if the actual cause that triggers the user experience event type is determined to be an initial computing power service cause according to the measurement result, then determine a new computing power service, determine a new computing power service routing strategy to reach the new computing power service, and send the new computing power service routing strategy to the terminal device; or
if the actual cause that triggers the user experience event type is determined to be the terminal device according to the measurement result, then send the feedback information to the terminal device, wherein the feedback information comprises the actual cause and/or a solution; or
if the actual cause that triggers the user experience event type is determined to be the terminal device according to the measurement result, then determine a new computing power service routing strategy to reach a new computing power service according to a capability of the terminal device, computing power resource status, and network resource status, and send the new computing power service routing strategy to the terminal device; or
if the actual cause that triggers the user experience event type is determined to be the terminal device according to the measurement result, and the terminal device is determined to be incapable of capability enhancement, then determine a new computing power service with a lower computing capability than the initial computing power service, determine a new computing power service routing strategy to reach the new computing power service, and send the new computing power service routing strategy to the terminal device.

68. The apparatus according to claim 55, wherein when determining the adjusted computing power service routing strategy according to the measurement result and sending the adjusted computing power service routing strategy to the terminal device, or when sending feedback information to the terminal device, the computing power service adjusting unit is configured to:
determine the adjusted computing power service routing strategy according to the measurement result, and send the adjusted computing power service routing strategy to a RAN entity, to enable the RAN entity to send the adjusted computing power service routing strategy to the terminal device; or
send the feedback information to a RAN entity, to enable the RAN entity to send the feedback information to the terminal device.

69. The apparatus according to claim 55, wherein when determining the initial computing power service routing strategy according to the business requirement of the terminal device, the computing power service orchestrating unit is configured to:
receive the business requirement sent by the terminal device, and determine an initial service routing strategy according to the business requirement; or
receive the business requirement sent by a RAN entity, and determine an initial service routing strategy according to the business requirement, wherein the business requirement is sent by the terminal device to the RAN entity.

70. The apparatus according to claim 55, wherein when sending the initial computing power service routing strategy to the terminal device, the computing power service orchestrating unit is configured to:
send the initial computing power service routing strategy to a RAN entity, to enable the RAN entity to send the initial computing power service routing strategy to the terminal device.

71. The apparatus according to claim 70, wherein the computing power service orchestrating unit is further configured to:
send the initial computing power service routing strategy to a core network entity, to enable establishment of a user plane path according to the initial computing power service routing strategy for the terminal device to access the initial computing power service corresponding to the initial computing power service routing strategy.

72. The apparatus according to claim 55, wherein when sending the initial computing power service routing strategy to the terminal device, the computing power service orchestrating unit is configured to:
send an identifier of a computing power node hosting the initial computing power service and an identifier of the initial computing power service to the terminal device.

73. An apparatus for processing computing power and network services, **characterized by** comprising:
a receiving unit, configured to receive an initial computing power service routing strategy determined by a management center according to a business requirement of the terminal device;
an accessing unit, configured to access a corresponding initial computing power service according to the initial computing power service routing strategy;
a sending unit, configured to send user experience information for the initial computing power service to the management center;
the receiving unit is further configured to receive an adjusted computing power service routing strategy or feedback information sent by the management center, wherein the adjusted computing power service routing strategy is a computing power service routing strategy adjusted by the management center after performing the corresponding measurement according to the user experience information.

74. The apparatus according to claim 73, wherein when sending the user experience information for the initial computing power service to the management center, the sending unit is configured to:
receive a user experience event subscription message sent by the management center, wherein the user experience event subscription message comprises a user experience event type for the initial computing power service;
determine whether the user experience event type is triggered;
upon determining that the user experience event type is triggered, send the user experience information for the initial computing power service to the management center.

75. The apparatus according to claim 74, wherein when receiving the user experience event subscription message sent by the management center, the receiving unit is configured to:
receive the user experience event subscription message sent by a RAN entity through the receiving unit, wherein the user experience event subscription message is sent by the management center to the RAN entity;
when sending the user experience information for the initial computing power service to the management center, the sending unit is configured to:
send the user experience information for the initial computing power service to the RAN entity, to enable the RAN entity to send the user experience information for the initial computing power service to the management center.

76. The apparatus according to claim 73, wherein when sending the user experience information for the initial computing power service to the management center, the sending unit is configured to:
actively send the user experience information for the initial computing power service to the management center, wherein the user experience information is subjective perception information of the user for the initial computing power service; or
receive a user experience information collection request for the initial computing power service sent by the management center through the receiving unit, and send the user experience information for the initial computing power service to the management center in response to the user experience information collection request, wherein the user experience information is subjective perception information of the user for the initial computing power service.

77. The apparatus according to claim 76, wherein when actively sending the user experience information for the initial computing power service to the management center, the sending unit is configured to:
actively send the user experience information for the initial computing power service to a RAN entity, to enable the RAN entity to send the user experience information for the initial computing power service to the management center; or
when receiving the user experience information collection request for the initial computing power service sent by the management center through the receiving, and sending the user experience information for the initial computing power service to the management center in response to the user experience information collection request, the sending unit is configured to:
receive the user experience information collection request for the initial computing power service sent by a RAN entity through the receiving unit, wherein the user experience information collection request is actively sent by the terminal device to the RAN entity; in response to the user experience information collection request, send the user experience information for the initial computing power service to the RAN entity, to enable the RAN entity to send the user experience information for the initial computing power service to the management center.

78. The apparatus according to any one of claims 73 to 77, wherein the sending unit is further configured to:
when the management center initiates a computing capacity measurement of the terminal device, obtain one or more of a load size, a computing power resource size, and a computing power resource utilization rate of the terminal device, and send to the management center; or
when the management center initiates a network-access capability measurement of the terminal device, obtain one or more of a wireless access capability of the terminal device and a terminal device type, and send to the management center.

79. The apparatus according to any one of claims 73 to 77, wherein when receiving the adjusted computing power service routing strategy or the feedback information sent by the management center, the receiving unit is configured to:
receive the adjusted computing power service routing strategy or the feedback information sent by a RAN entity, wherein the adjusted computing power service routing strategy or the feedback information is sent by the management center to the RAN entity.

80. The apparatus according to any one of claims 73 to 77, wherein when accessing the corresponding initial computing power service according to the initial computing power service routing strategy, the accessing unit is configured to, comprising:
initiate an application used for accessing the initial computing power service, and access the initial computing power service through the application.

81. The apparatus according to any one of claims 73 to 77, wherein before receiving the initial computing power service routing strategy determined by the management center according to the business requirement of the terminal device, the sending unit is further configured to:
send the business requirement to the management center; or
send the business requirement to a RAN entity to enable the RAN entity to send the business requirement to the management center.

82. A non-transitory readable storage medium, wherein the non-transitory readable storage medium stores a computer program, and the computer program is configured to enable a processor to execute the method according to any one of claims 1 to 27.
